(19) Europäisches Patentamt
European Patent Office
Office européen des brevets

(11) **EP 1 297 639 B1**

(12) **EUROPÄISCHE PATENTSCHRIFT**

(45) Veröffentlichungstag und Bekanntmachung des Hinweises auf die Patenterteilung:
**19.01.2005   Patentblatt 2005/03**

(51) Int Cl.$^7$: **H04B 7/06**

(21) Anmeldenummer: **01956300.6**

(22) Anmeldetag: **29.06.2001**

(86) Internationale Anmeldenummer:
**PCT/DE2001/002405**

(87) Internationale Veröffentlichungsnummer:
**WO 2002/003565 (10.01.2002 Gazette 2002/02)**

(54) **STRAHLFORMUNGSVERFAHREN MIT ZYKLISCH ERNEUERTEN GEWICHTUNGSVEKTOREN**

BEAM FORMING METHOD

PROCEDE DE FORMATION DE FAISCEAU

(84) Benannte Vertragsstaaten:
**AT BE CH CY DE DK ES FI FR GB GR IE IT LI LU MC NL PT SE TR**

(30) Priorität: **04.07.2000   DE 10032426**

(43) Veröffentlichungstag der Anmeldung:
**02.04.2003   Patentblatt 2003/14**

(73) Patentinhaber: **SIEMENS AKTIENGESELLSCHAFT**
**80333 München (DE)**

(72) Erfinder:
• **BRUNNER, Christopher**
**54516 Wittlich (DE)**
• **SEEGER, Alexander**
**85622 Feldkirchen (DE)**
• **RAAF, Bernhard**
**81475 München (DE)**

(56) Entgegenhaltungen:
**EP-A- 0 999 658        WO-A-00/60764**
**WO-A-01/31812        DE-A- 19 803 188**
**US-B1- 6 177 906**

**Beschreibung**

Die Erfindung betrifft ein Verfahren zur Strahlformung in einem Funk-Kommunikationssystem mit einer Basisstation, deren zugeordnete Antenneneinrichtung mehrere Antennenelemente aufweist, so daß eine räumliche Auflösung bei der Strahlformung möglich ist.

In Funk-Kommunikationssystemen werden Nachrichten (Sprache, Bildinformation oder andere Daten) über Übertragungskanäle mit Hilfe von elektromagnetischen Wellen (Funkschnittstelle) übertragen. Die Übertragung erfolgt sowohl in Abwärtsrichtung (downlink) von der Basisstation zu der Teilnehmerstation, als auch in Aufwärtsrichtung (uplink) von der Teilnehmerstation zur Basisstation.

Signale, die mit den elektromagnetischen Wellen übertragen werden, unterliegen bei ihrer Ausbreitung in einem Ausbreitungsmedium u.a. Störungen durch Interferenzen. Störungen durch Rauschen können u.a. durch Rauschen der Eingangsstufe des Empfängers entstehen. Durch Beugungen und Reflexionen durchlaufen Signalkomponenten verschiedene Ausbreitungswege. Dies hat zum einen die Folge, daß ein Signal mehrfach, jeweils aus unterschiedlichen Richtungen, mit unterschiedlichen Verzögerungen, Dämpfungen und Phasenlagen, am Empfänger ankommen kann, und zum anderen können sich Beiträge des Empfangssignals kohärent mit wechselnden Phasenbeziehungen beim Empfänger überlagern und dort zu Auslöschungseffekten auf einem kurzfristigen Zeitmaßstab (fast fading) führen.

Aus DE 197 12 549 A1 ist bekannt, intelligente Antennen (smart antennas), d. h. Antennenanordnungen mit mehreren Antennenelementen, zu nutzen, um die Übertragungskapazität in Aufwärtsrichtung zu erhöhen. Diese ermöglichen eine gezielte Ausrichtung des Antennengains in eine Richtung, aus der das Aufwärtssignal kommt.

Aus A.J.Paulraj, C.B.Papadias, "Space-time processing for wireless communications", IEEE Signal Processing Magazine, Nov. 1997, S.49-83, sind verschiedene Verfahren zur räumlichen Signaltrennung für Auf- und Abwärtsrichtung bekannt.

Für die Abwärtsrichtung, also von Basisstation zur Teilnehmerstation, treten besondere Schwierigkeiten auf, da die Strahlformung vor der Beeinflussung der übertragenen Signale durch den Funkkanal vorzunehmen ist. Aus R. Schmalenberger, J.J. Blanz, "A comparison of two different algorithms for multi antenna C/I balancing", Proc. 2nd European Personal Mobile Communications Conference (EPMCC), Bonn, Germany, Sept. 1997, S.483-490, ist ein Algorithmus der Strahlformung in Abwärtsrichtung bekannt, wobei ein direkter Ausbreitungspfad (Sichtverbindung) zwischen den Basisstationen und den Teilnehmerstationen und eine iterative Berechnung von Strahlformungsvektoren vorausgesetzt wird. Mit jeder Änderung der Eigenschaften des Übertragungskanals muß die gesamte aufwendige iterative Berechnung wiederholt werden.

Aus EP 0 999 658 ist ein Verfahren bekannt bei dem für ein Funksystem mit Raum-Zeit-Diversität die Gemichtungsvektoren iterativ bestimmt und für die erste Iteration willkürliche Werte angenommen werden.

Aus DE 198 03 188 A ist ein Verfahren bekannt, wobei eine räumliche Kovarianzmatrix für eine Verbindung von einer Basisstation zu einer Teilnehmerstation bestimmt wird. In der Basisstation wird ein Eigenvektor aus der Kovarianzmatrix berechnet und für die Verbindung als ein Strahlformungsvektor verwendet. Die Sendesignale für die Verbindung werden mit dem Strahlformungsvektor gewichtet und Antennenelementen zur Abstrahlung zugeführt. Intrazell-Inter-ferenzen werden aufgrund der Verwendung von Joint-Detection, beispielsweise in den Endgeräten, in die Strahlformung nicht einbezogen und eine Verfälschung der empfangenen Signale durch Interzell-Interferenzen wird vernachlässigt.

Anschaulich gesprochen ermittelt dieses Verfahren in einer Umgebung mit Mehrwegausbreitung einen Ausbreitungsweg mit guten Übertragungseigenschaften und konzentriert die Sendeleistung der Basisstation räumlich auf diesen Ausbreitungsweg. Dadurch kann jedoch nicht verhindert werden, daß Interferenzen auf diesem Übertragungsweg kurzfristig zu Signalauslöschungen und somit zu Unterbrechungen der Übertragung führen können.

Die Empfehlungen des 3GPP (3rd Generation Partnership Project, http://www.3gpp.org) sehen deshalb Verfahren vor, bei denen die Teilnehmerstation eine kurzfristige Kanalimpulsantwort $h_m$ des Kanals vom m-ten Antennenelement zur Teilnehmerstation schätzt und Gewichtungsfaktoren $w_m$ berechnet, mit denen das Sendesignal vor Abstrahlung durch das m-te Antennenelement gewichtet werden soll. Entsprechende Konzepte sind auch in M. Raitola, A. Hottinen und R. Wichmann, "Transmission diversity in wideband CDMA", erschienen in Proc. 49th IEEE Vehicular Technology Conf. Spring (VTC '99 Spring), S. 1545-1549, Houston, Texas 1999, behandelt.

Ein schwerwiegendes Problem dieser Vorgehensweise ist, daß der von der Teilnehmerstation abgeschätzte Vektor der Gewichtungsfaktoren an die Basisstation übertragen werden muß, und daß hierfür gemäß den Empfehlungen des 3GPP nur eine geringe Bandbreite von einem Bit pro Zeitschlitz (slot) zur Verfügung steht. Die Vektoren können daher nur grob quantisiert übertragen werden. Wenn sich der Kanal schnell ändert und die Gewichtungen von einem Zeitschlitz zum anderen aktualisiert werden müssen, sind lediglich zwei verschiedene relative Phasenlagen der Antennenelemente einstellbar. Wenn der Kanal sich langsamer ändert und z. B. vier Zeitschlitze zum Übertragen des Vektors zur Verfügung stehen, sind immerhin 16 verschiedene Werte des Vektors darstellbar.

Die bekannten Konzepte stoßen jedoch an ihre Grenzen, wenn die Zahl der Antennenelemente der Basisstation größer als zwei ist, denn die zum Übertragen des Vektors benötigte Bandbreite nimmt mit dessen Komponentenzahl, d. h. mit der Zahl der Antennenelemente zu. Das bedeutet: eine große Zahl von Antennenelementen wäre zwar einerseits wünschenswert, um den Sendestrahl möglichst genau ausrichten zu können, andererseits kann infolge der begrenzten verfügbaren Bandbreite der Gewichtungsvektor nicht so oft aktualisiert werden, wie dies zur Anpassung an das schnelle Fading erforderlich wäre.

Der Erfindung liegt die Aufgabe zugrunde, ein verbessertes Verfahren zur Strahlformung anzugeben, das eine zuverlässigere Formung des Downlink-Strahls erlaubt.

Diese Aufgabe wird durch das erfindungsgemäße Verfahren mit den Merkmalen des Patentanspruchs 1 gelöst. Weiterbildungen der Erfindung sind den Unteransprüchen zu entnehmen.

Das erfindungsgemäße Verfahren zur Datenübertragung wird in einem Funk-Kommunikationssystem mit einer Basisstation und Teilnehmerstationen eingesetzt. Die Teilnehmerstationen sind beispielsweise Mobilstationen, so in einem Mobilfunknetz, oder Feststationen, so in sogenannten Teilnehmerzugangs-Netzen zum drahtlosen Teilnehmeranschluß. Die Basisstation weist eine Antenneneinrichtung (smart antenna) mit mehreren Antennenelementen auf. Die Antennenelemente ermöglichen einen gerichteten Empfang bzw. eine gerichtete Sendung von Daten über die Funkschnittstelle.

Das erfindungsgemäße Verfahren unterscheidet zwischen einer Initialisierungsphase, die jeweils in größeren Zeitabständen entsprechend einer großen Zahl von Zeitschlitzen der betreffenden Teilnehmerstation durchgeführt wird, und einer Arbeitsphase, deren Schritte häufiger, z.B. bis zu einmal pro Zeitschlitz, durchgeführt werden. In der Initialisierungsphase wird eine Mehrzahl von sogenannten ersten Gewichtungsvektoren ermittelt, die in einer anschließenden Arbeitsphase des Funk-Kommunikationssystems herangezogen werden, um einen tatsächlich für die Strahlformung verwendeten aktuellen Gewichtungsvektor jeweils für jeden Zyklus der Arbeitsphase neu festzulegen. Der mit der Ermittlung der Gewichtungsvektoren verbundene Verarbeitungsaufwand fällt daher nur relativ selten, in den Initialisierungsphasen, an; die Festlegung des aktuellen Gewichtungsvektors, die z.B. lediglich eine Auswahl oder das Bilden einer Linearkombination der ersten Gewichtungsvektoren erfordert, kann hingegen so häufig ausgeführt werden, wie erforderlich, um durch schnelles Fading verursachte Übertragungsunterbrechungen zu kompensieren.

Wenn hier von Initialisierungsphase und Arbeitsphase gesprochen wird, so darf dies nicht dahingehend verstanden werden, daß man es hier mit zwei zeitlich getrennten, nacheinander ablaufenden Vorgängen zu tun hätte. Es handelt sich vielmehr um zwei Teilprozesse des Verfahrens, die fortlaufend und zeitlich verschränkt ablaufen können. Zwar werden in der Arbeitsphase die Ergebnisse der Initialisierungsphase genutzt, doch laufen die Vorgänge der Initialisierungsphase zweckmäßigerweise gleichzeitig mit denen der Arbeitsphase, damit der Arbeitsphase fortlaufend aktualisierte Werte der ersten Gewichtungsvektoren zur Verfügung stehen.

In Anbetracht dessen, daß die Gewichtungsvektoren sich während des Bestehens einer Gesprächsverbindung zwischen Teilnehmerstation und Basisstation nur langsam oder gar nicht ändern, und daß die Kompensation von schnellem Fading durch Umschalten oder wechselndes Gewichten von Gewichtungsvektoren an der Basisstation in kurzen Zeitabständen erfolgen soll, kann die in der Initialisierungsphase an die Basisstation übertragene Information über die Komponenten der Gewichtungsvektoren auch als Langzeit-Rückkopplungsinformation und die in der Arbeitsphase übertragene als Kurzzeit-Rückkopplungsinformation bezeichnet werden.

In einem zeitlich frühen Stadium des Verfahrens, bevor die Initialisierungsphase erstmalig durchgeführt worden ist, könnte streng genommen die Arbeitsphase nicht ablaufen und es könnten somit noch keine Daten zwischen Endgerät und Basisstation ausgetauscht werden. In dieser Situation kann man sich behelfen, indem man die Arbeitsphase zunächst unter Zugrundelegung von willkürlich vorgegebenen Werten der ersten Gewichtungsvektoren ausführt.

Der Einfachheit halber können als vorgegebene Gewichtungsvektoren solche Vektoren angenommen werden, die abgesehen von einer nichtverschwindenden Komponente, vorzugsweise mit dem Wert 1, nur Komponenten mit Wert 0 haben.

Eine erste bevorzugte Ausgestaltung des Verfahrens sieht vor, daß die ersten Gewichtungsvektoren anhand von Messungen der Downlink-Übertragung ermittelt werden. Diese Vorgehensweise ist insbesondere zweckmäßig bei Funk-Kommunikationssystemen, die unterschiedliche Frequenzen für Uplink und Downlink verwenden, denn bei solchen Funk-Kommunikationssystemen ist der schnelle Signalschwund (fast fading) auf den unterschiedlichen Frequenzen nicht korreliert. Darüber hinaus müssen Schritte des erfindungsgemäßen Verfahrens, die sowohl für die Ermittlung der ersten Gewichtungsvektoren in der Initialisierungsphase als auch für die Neufestlegung der aktuellen Gewichtungsvektoren in der Arbeitsphase ausgeführt werden, somit nur an der Teilnehmerstation ausgeführt werden. So wird doppelter Verarbeitungsaufwand vermieden, und auch Schaltungskomponenten für die Durchführung der Verfahrensschritte müssen nur einmal, an der Teilnehmerstation, vorgesehen werden.

Dabei werden zweckmäßigerweise in der Initialisierungsphase die an der Teilnehmerstation ermittelten ersten Gewichtungsvektoren an die Basisstation übertragen, und in der Arbeitsphase erfolgt die Neufestlegung des aktuellen Gewichtungsvektors dadurch, daß die Teilnehmerstation unter den ermittelten ersten Gewichtungsvektoren einen dominierenden auswählt und eine Bezeichnung des ausgewählten dominierenden Gewichtungsvektors an die Basisstation überträgt. Da diese Übertragung nicht in jedem einzelnen Zeitschlitz der Teilnehmerstation stattfinden muß, kann ihr zeitweilig ein eigener Kanal zugeordnet werden, oder in einzelnen Zeitschlitzen kann die Übertragung von Nutzdaten wie Sprache von der Teilnehmerstation zur Basisstation unterbrochen oder eingeschränkt werden, um Übertragungsbandbreite für die Übertragung der Gewichtungsvektoren zu schaffen. Diese Gewichtungsvektoren können so mit einer wesentlich höheren Auflösung übertragen werden, als dies bei den herkömmlichen Verfahren mit der Übertragungsbandbreite von einem Bit pro Zeitschlitz möglich ist. Alternativ kann die Übertragung der Gewichtungsvektoren auch im Zeitmultiplex mit den Bezeichnungen stattfinden. Dabei wird vorzugsweise das Verhältnis der Zahl der Zeitschlitze, in denen Bezeichnungen der Gewichtungsvektoren übertragen werden, zu denen, in denen Information über neue bzw. veränderte Werte der Komponenten der Gewichtungsvektoren übertragen wird, dynamisch in Abhängigkeit von der Geschwindigkeit der Teilnehmerstation festgelegt. So kann z.B. im Falle einer unbewegten Teilnehmerstation, bei der Fading keinen oder nur geringen Einfluß auf die Übertragungsqualität der einzelnen Ausbreitungswege hat, oder einer extrem schnell bewegten Teilnehmerstation, bei der sich die Übertragungsqualitäten der Übertragungswege so schnell ändern, daß die Strahlformung nicht schnell genug nachgeregelt werden kann, überwiegend oder ausschließlich Information über die Komponenten der Eigenvektoren übermittelt werden, während bei geringeren Geschwindigkeiten überwiegend Bezeichnungen übertragen werden.Die Gewichtungsvektoren entsprechen jeweils Abstrahlungsrichtungen der Antenneneinrichtung der Basisstation. Zwar kann es durch schnelles Fading zu kurzfristigen Beeinträchtigungen der Übertragung auf einem solchen gerichteten Ausbreitungsweg kommen; die Richtungen selber, in die das Downlink-Signal abgestrahlt werden muß, um die Teilnehmerstation gut zu erreichen, ändern sich aber auch bei einer bewegten Teilnehmerstation nur langsam, etwa in einem Zeitmaßstab von Sekunden bis Minuten. Deshalb sind die an die Basisstation übertragenen Gewichtungsvektoren über eine Zeitspanne von entsprechender Länge für die Strahlformung brauchbar, auch wenn nicht alle Gewichtungsvektoren zu jedem Zeitpunkt eine Übertragung mit guter Qualität erlauben. Wenn die Übertragungsqualität eines zu einem gegebenen Zeitpunkt verwendeten Gewichtungsvektors nachläßt, muß die Basisstation kurzfristig auf einen anderen Gewichtungsvektor wechseln, der eine befriedigende bzw. die bestmögliche Übertragung erlaubt. Dieser Gewichtungsvektor wird hier als dominierender Gewichtungsvektor bezeichnet. Da die einzelnen Koeffizienten dieses Gewichtungsvektors bereits an der Basisstation bekannt sind, müssen sie in der Arbeitsphase nicht mehr einzeln übertragen werden; es genügt, lediglich eine Bezeichnung zu übertragen, die es der Basisstation erlaubt, den von der Teilnehmerstation gewünschten dominierenden Gewichtungsvektor unter den bei ihr gespeicherten auszuwählen und zur Übertragung zu verwenden. Die Informationsmenge, die zur Übertragung einer solchen Bezeichnung erforderlich ist, ist völlig unabhängig davon, mit welcher Auflösung die Koeffizienten der Gewichtungsvektoren in der Initialisierungsphase übertragen worden sind, und sie ist auch unabhängig von der Zahl der Koeffizienten jedes Vektors, das heißt von der Zahl der Antennenelemente der Antenneneinrichtung der Basisstation. Diese Informationsmenge wächst lediglich logarithmisch mit der Zahl der an die Basisstation übertragenen Gewichtungsvektoren. Auf diese Weise ist in der Arbeitsphase der Teilnehmerstation eine hochgenaue Strahlformung bei minimalem Bandbreitenbedarf für die Übertragung der Bezeichnung möglich.

Vorzugsweise wird in der Initialisierungsphase eine erste räumliche Kovarianzmatrix des empfangenen Downlink-Signals erzeugt, und es werden Eigenvektoren dieser ersten Kovarianzmatrix ermittelt, die als Gewichtungsvektoren an die Basisstation übertragen werden.

Diese erste Kovarianzmatrix kann für das gesamte von der Teilnehmerstation empfangene Downlink-Signal einheitlich erzeugt werden. Da die einzelnen Beiträge zum von der Teilnehmerstation empfangenen Downlink-Signal sich jedoch nicht nur durch den zurückgelegten Weg, sondern auch durch die für diesen Weg benötigte Laufzeit unterscheiden, ist es aufschlußreicher, wenn die erste Kovarianzmatrix für jeden Tap des Downlink-Signals einzelnen erzeugt wird.

Vorzugsweise werden aus der Gesamtheit der Eigenvektoren der ersten Kovarianzmatrix bzw. -matrizen diejenigen Eigenvektoren ermittelt, die die größten Eigenwerte aufweisen, denn diese entsprechen den Ausbreitungswegen mit der geringsten Dämpfung.

Um einen repräsentativen Aufschluß über die Qualität der einzelnen Übertragungswege zu gewinnen, ist es ferner zweckmäßig, daß jede erste Kovarianzmatrix über eine Vielzahl von Zeitschlitzen des Downlink-Signals gemittelt wird.

Um in der Arbeitsphase den jeweils zeitweilig am besten geeigneten Gewichtungsvektor zu ermitteln, wird vorzugsweise eine zweite räumliche Kovarianzmatrix erzeugt, und als dominierender Gewichtungsvektor wird derjenige unter den ermittelten Eigenvektoren ausgewählt, der mit der zweiten Kovarianzmatrix den größten Eigenwert aufweist. Diese zweite räumliche Kovarianzmatrix kann z.B. für jeden der Teilnehmerstation zugeteilten Zeitschlitz von neuem erzeugt werden.

Um bei der Erzeugung der Kovarianzmatrizen die Beiträge der einzelnen Antennenelemente unterscheiden zu können, ist es zweckmäßig, daß jedes Antennenelement periodisch eine Trainingssequenz ausstrahlt, die der Teilnehmerstation bekannt und zu den Trainingssequenzen der anderen Antennenelemente orthogonal ist, und daß die Gewichtungsvektoren anhand der von der Teilnehmerstation empfangenen Trainingssequenzen ermittelt werden.

Einer speziellen Ausgestaltung zufolge, kann die Zahl der ermittelten Gewichtungsvektoren zwei betragen; in diesem Fall genügt ein Bit zur Bezeichnung des jeweils dominierenden Gewichtungsvektors in der Arbeitsphase, und dieses Bit kann in jedem der Teilnehmerstation zugeteilten Zeitschlitz übertragen werden.

Es kann auch eine größere Zahl von Gewichtungsvektoren ermittelt werden, vorzugsweise eine Zweierpotenz $2^n$, wobei in diesem Fall n Bits zur Bezeichnung des dominierenden Gewichtungsvektors benötigt werden. Die Übertragung dieser Bezeichnung kann auf mehrere Zeitschlitze verteilt erfolgen; wenn in jedem Zeitschlitz a Bits für die Übertragung zur Verfügung stehen, werden n/a Zeitschlitze benötigt, und der durch die Bezeichnung spezifizierte Gewichtungsvektor wird in den n/a unmittelbar auf die vollständige Übertragung der Bezeichnung folgenden Zeitschlitzen eingesetzt.

Einer zweiten bevorzugten Ausgestaltung zufolge werden die ersten Gewichtungsvektoren anhand von Messungen der Uplink-Übertragung ermittelt. Diese Vorgehensweise hat den Vorteil, daß die Übertragung der Koeffizienten der ersten Gewichtungsvektoren von der Teilnehmerstation zur Basisstation nicht erforderlich ist. Ein solches Verfahren ist daher besser kompatibel mit existierenden Mobilfunksystemen, die eine solche Übertragung nicht vorsehen.

Zwar ist das schnelle Fading bei Mobilfunksystemen, die unterschiedliche Frequenzen für Uplink und Downlink anwenden, für die beiden Übertragungsrichtungen unterschiedlich, dies wirkt sich jedoch auf die Ermittlung der ersten Gewichtungsvektoren nicht störend aus, wenn letztere durch eine zeitliche Mittelung, insbesondere anhand einer gemittelten Kovarianzmatrix, erhalten werden.

Auch hier ist es bevorzugt, wenn die ersten Gewichtungsvektoren jeweils Eigenwerte einer Kovarianzmatrix sind, denn diese Eigenwerte entsprechen jeweils einem einzelnen Ausbreitungsweg des zwischen Basisstation und Teilnehmerstation auf möglicherweise mehreren verschiedenen Wegen gleichzeitig ausgetauschten Funksignals. Wenn zwischen der Teilnehmerstation und der Basisstation ein direkter Ausbreitungsweg (LOS, line of sight) besteht, was für die Basisstation anhand der Empfangsstatistik des Uplink-Signals feststellbar ist, so genügt es, daß diese das Downlink-Signal mit einem einzigen, diesem Übertragungsweg entsprechenden Gewichtungsvektor gewichtet ausstrahlt. Auf diese Weise wird die Sendeleistung der Basisstation gezielt auf den direkten Übertragungsweg ausgerichtet, andere Übertragungswege geringerer Güte werden nicht gezielt mit Sendeleistung versorgt.

Falls ein direkter Übertragungsweg nicht gegeben ist, kann als aktueller Gewichtungsvektor eine Linearkombination von ersten Gewichtungsvektoren verwendet werden. Dies entspricht einer gezielten Aufteilung der Sendeleistung der Basisstation auf eine begrenzte Zahl von Ausbreitungswegen entsprechend der Zahl der in die Linearkombination eingehenden aktuellen Gewichtungsvektoren. Falls in einer solchen Situation einer der Übertragungswege durch schnelles Fading kurzfristig ausfällt, ist die Wahrscheinlichkeit groß, daß wenigstens ein anderer Gewichtungsvektor der Linearkombination einem Übertragungsweg mit brauchbarer Qualität entspricht. Dies gilt insbesondere dann, wenn es sich bei den ersten Gewichtungsvektoren um die Eigenvektoren der Kovarianzmatrix handelt, da bei diesen die Wahrscheinlichkeiten einer destruktiven Interferenz statistisch nicht korreliert sind.

Um bei einer solchen Übertragung unter Verwendung einer Linearkombination von Eigenvektoren einen möglichst guten Signal-Störabstand zu erzielen, können die Koeffizienten der Linearkombination für einen ersten Gewichtungsvektor um so größer gewählt werden, je größer dessen Eigenwert ist.

Falls die Verzögerung des Downlink-Signals auf zwei Übertragungswegen identisch ist, ist die Teilnehmerstation nicht ohne weiteres in der Lage, die Anteile dieser zwei Übertragungswege zu den von ihr empfangenem Signal auseinander zu halten. Es besteht daher die Möglichkeit, daß diese zwei Beiträge am Ort der Teilnehmerstation gegenphasig sind und sich gegenseitig auslöschen. Eine solche gegenseitige Auslöschung kann zuverlässig vermieden werden, wenn an der Basisstation aus einer für die Teilnehmerstation bestimmten Nutzdatenfolge mehrere Downlink-Signale erzeugt werden, die jeweils eine unterschiedliche Space-Time-Block-Kodierung aufweisen, und jedes dieser Downlink-Signale mit einem anderen aktuellen Gewichtungsvektor gewichtet ausgestrahlt wird. Auf diese Weise wird jedem Ausbreitungsweg eine charakteristische Space-Time-Block-Kodierung zugeordnet, die die Beiträge der verschiedenen Übertragungswege unter allen Umständen unterscheidbar macht.

Der aktuelle Gewichtungsvektor, mit dem die Basisstation ein Downlink-Signal gewichtet auf die Antennenelemente gibt, muß nicht notwendigerweise mit einem der ermittelten ersten Gewichtungsvektoren identisch sein; es kann sich auch um eine Linearkombination mehrerer erster Gewichtungsvektoren handeln. Bei einem solchen Verfahren kann eine Strahlformung anhand von der Teilnehmerstation an die Basisstation übertragener Kurzzeit-Rückkopplungsinformation z.B. dadurch erfolgen, daß die Teilnehmerstation an die Basisstation anstelle der Bezeichnungen von zu verwendeten Eigenvektoren Informationen über die Gewichtungskoeffizienten der Linearkombination überträgt. Diese Information kann Angaben über den Betrag und insbesondere über die Phase der Gewichtungskoeffizienten beinhalten. Dies ermöglicht es einer Basisstation zwei oder mehrere erste Gewichtungsvektoren phasenmäßig und ggf. amplitudenmäßig derart zu koordinieren, daß sich das SNR (Signal zu Rausch Abstand) am Teilnehmergerät maximiert.

Die von einer Teilnehmerstation ermittelten Gewichtungsvektoren können an die Basisstation übertragen werden, indem jeweils die Werte ihrer einzelnen Komponenten sukzessive an die Basisstation übermittelt werden. Die hierfür benötigte Datenmenge und damit auch die Dauer der Übertragung hängt ab von der Auflösung, mit der die Gewichtungsvektoren ermittelt und übertragen werden. Eine solche komponentenweise Übertragung ist zweckmäßig, wenn in einer frühen Phase der Verbindung zwischen Teilnehmer- und Basisstation die von der Teilnehmerstation ermittelten Vektoren erstmalig übermittelt werden müssen.

Wenn die Basisstation über einen Satz von Gewichtungsvektoren verfügt und die Initialisierungsphase wiederholt wird, um aktuelle Werte der ersten Gewichtungsvektoren zu ermitteln (was sinnvollerweise turnusmäßig geschehen sollte), kann in erheblichem Umfang Übertragungsbandbreite bei der Überrtagung der Langzeit- Rückkopplungsinformation eingespart werden, indem anstelle der Werte der Komponenten eines aktuell ermittelten ersten Gewichtungsvektors jeweils nur noch die Änderung der Komponenten gegenüber dem vorherigen Wert dieses Vektors von der Teilnehmerstation an die Basisstation übertragen wird und dort zu einem in der vorherigen Initialisierungsphase ermittelten Wert addiert wird. Der auf diese Weise an der Basisstation wiedergewonnene aktuelle Wert des ersten Gewichtungsvektors kann eine wesentlich höhere Auflösung aufweisen, als der übertragenen Bitzahl entspricht.

Im Grenzfall kann sich die Differenzbildung darauf beschränken, daß für jede Komponente des ersten Gewichtungsvektors das Vorzeichen der Differenz zwischen dem in der aktuellen Initialisierungsphase ermittelten Wert und einem in einer vorherigen Initialisierungsphase ermittelten Wert gebildet wird, daß die Vorzeichen an die Basisstation übertragen werden und jede Komponente des dort gespeicherten ersten Gewichtungsvektors entsprechend dem übertragenen Vorzeichen um eine Einheit inkrementiert bzw. dekrementiert wird.

Dabei ist es ohne Belang, ob komplexwertige Komponenten der ersten Gewichtungsvektoren intern in der Teilnehmerstation und der Basisstation in einer kartesischen oder einer polaren Darstellung gehandhabt werden. Obwohl die Differenz zweier komplexer Werte in polarer Darstellung im allgemeinen nicht dem durch die Differenzen von Betrags- und Phasenanteil gebildeten Zahlenpaar entspricht, kann bei der hier betrachteten Anwendung die Aktualisierung des Gewichtungsvektors an der Basisstation auch durch Übertragung dieses Zahlenpaars und seine komponentenweise Addition zu einem polar dargestellten Gewichtungsvektor an der Basisstation erfolgen.

Nachfolgend werden Ausführungsbeispiele anhand der Zeichnung näher erläutert. Es zeigen:

Fig. 1    ein Blockschaltbild eines Mobilfunknetzes

Fig. 2    ein Blockschaltbild der Basisstation;

Fig. 3    ein Blockschaltbild der Teilnehmerstation und

Fig. 4    ein Flußdiagramm des Verfahrens gemäß einer ersten Ausgestaltung;

Fig. 5    ein Flußdiagramm des Verfahrens gemäß einer zweiten Ausgestaltung;

Fig. 6A, B und C    Multiplexformate für die Übertragung von Kurzzeit- und Langzeit-Rückkopplungsinformation;

Fig. 7    ein Blockschaltbild eines Teils einer Sende/Empfangseinrichtung einer Basisstation; und

Fig. 8A, B    die zeitliche Entwicklung einer Komponente eines Gewichtungsvektors an einer Basisstation für zwei verschiedene Verfahren zur Rückkopplung von Information über die Komponenten des Gewichtungsvektors an die Basisstation.

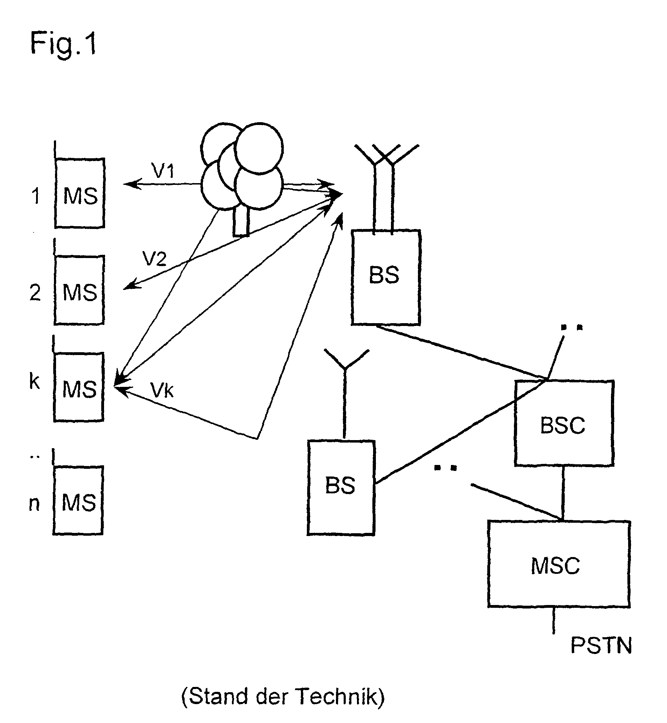

Figur 1 zeigt die Struktur eines Funk-Kommunikationssystems, bei dem das erfindungsgemäße Verfahren anwendbar ist. Es besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS kann über eine Funkschnittstelle eine Nachrichtenverbindung zu Teilnehmerstationen MS aufbauen. Hierfür sind wenigstens einzelne der Basisstationen BS mit Antenneneinrichtungen AE ausgerüstet, die mehrere Antennenelemente ($A_1$ - $A_M$) aufweisen.

In Fig. 1 sind beispielhaft Verbindungen V1, V2, Vk zur Übertragung von Nutzinformationen und Signalisierungsinformationen zwischen Teilnehmerstationen MS1, MS2, MSk, MSn und einer Basisstation BS dargestellt. Ein Operations- und Wartungszentrum OMC realisiert Kontroll- und Wartungsfunktionen für das Mobilfunknetz bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß.

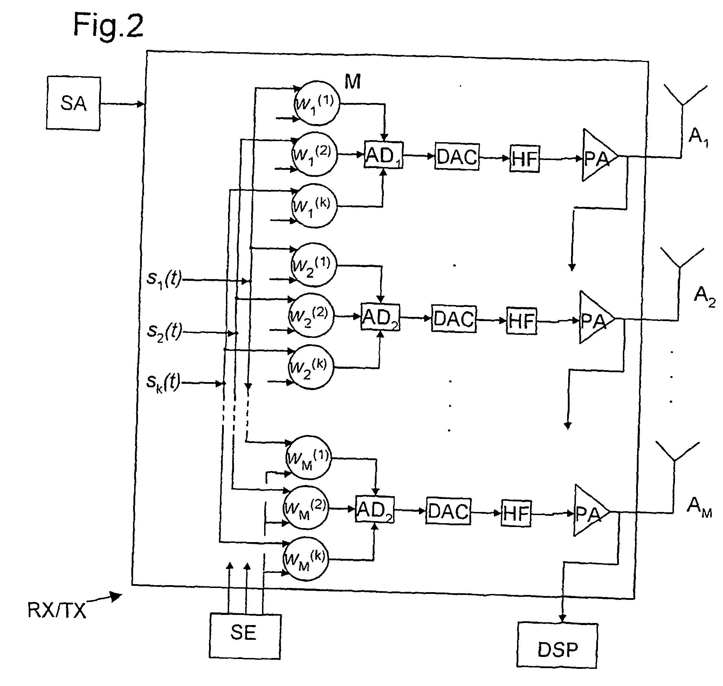

Fig. 2 zeigt schematisch den Aufbau einer Basisstation BS. Eine Signalerzeugungseinrichtung SA stellt das für die Teilnehmerstation MSk bestimmte Sendesignal in Funkblöcken zusammen und ordnet es einem Frequenzkanal TCH zu. Eine Sende/Empfangseinrichtung TX/RX empfängt das Sendesignal $s_k(t)$ von der Signalerzeugungseinrichtung SA. Die Sende/Empfangseinrichtung TX/RX umfaßt ein Strahlformungsnetzwerk, in dem das Sendesignal $s_k(t)$ für die Teilnehmerstation MSk mit Sendesignalen $s1(t)$, $s_2(t)$, ... verknüpft wird, die für andere Teilnehmerstationen bestimmt sind, denen die gleiche Sendefrequenz zugeordnet ist. Das Strahlformungsnetzwerk umfaßt für jedes Teilnehmersignal und jedes Antennenelement einen Multiplizierer M, der das Sendesignal $s_k(t)$ mit einer Komponente $w_m^{(k)}$ eines Gewichtungsvektors $\mathbf{w^{(k)}}$ multipliziert, der der empfangenden Teilnehmerstation MSk zugeordnet ist. Die Ausgangssignale der jeweils einem Antennenelement $A_m$, m = 1, ..., M zugeordneten Multiplizier M werden von einem Addierer $AD_m$, m = 1,2, ..., M addiert, von einem Digitalanalogwandler DAC analogisiert, auf die Sendefrequenz umgesetzt (HF) und in einem Leistungsverstärker PA verstärkt, bevor sie das Antennenelement $A_1$, ..., $A_M$ erreichen. Eine zu dem beschriebenen Strahlformungsnetz analoge Struktur, die in der Figur nicht eigens dargestellt ist, ist zwischen den Antennenelementen $A_1$, $A_2$, ..., $A_M$ und einem digitalen Signalprozessor DSP angeordnet, um das empfangene Gemisch von Uplink-Signalen in die Beiträge der einzelnen Teilnehmerstationen zu zerlegen und diese getrennt dem DSP zuzuführen.

Eine Speichereinrichtung SE enthält zu jeder Teilnehmerstation MSk einen Satz von Gewichtungsvektoren $\mathbf{w^{(k,1)}}$, $\mathbf{w^{(k,2)}}$, ..., unter denen der von den Multiplizierern M verwendete Gewichtungsvektor $\mathbf{w^{(k)}}$ ausgewählt ist.

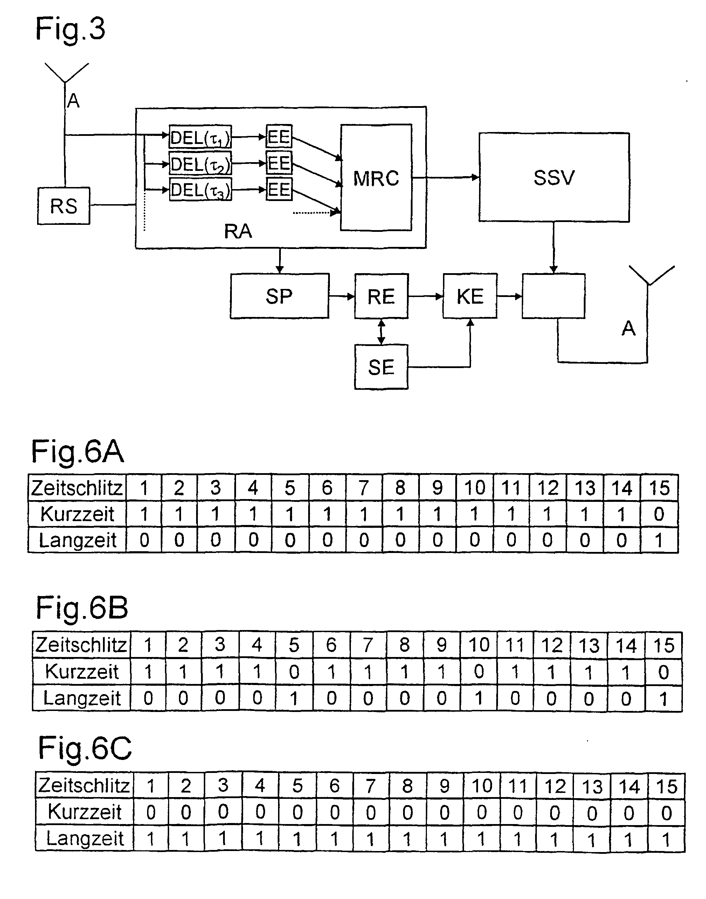

Figur 3 zeigt schematisch den Aufbau einer Teilnehmerstation MSk zur Durchführung einer ersten Ausgestaltung des erfindungsgemäßen Verfahrens. Die Teilnehmerstation MSk umfaßt eine einzige Antenne A, die das von der Basisstation BS ausgestrahlte Downlink-Signal empfängt. Das ins Basisband umgesetzte Empfangssignal von der Antenne A wird einem sogenannten Rake Searcher RS zugeführt, der dazu dient, Laufzeitunterschiede von Beiträgen des Downlink-Signals zu messen, die die Antenne A auf unterschiedlichen Ausbreitungswegen erreicht haben. Das Empfangssignal liegt ferner an einem Rake-Verstärker RA an, der eine Mehrzahl von Rake-Fingern umfaßt, von denen drei in der Figur dargestellt sind, und die jeweils ein Verzögerungsglied DEL und einen Entspreizer-Entscrambler EE aufweisen. Die Verzögerungsglieder DEL verzögern das Empfangssignal jeweils um einen vom Rake-Searcher RS gelieferten Verzögerungswert $\tau_1$, $\tau_2$, $\tau_3$, .... Die Entspreizer-Entscrambler EE liefern an ihren Ausgängen jeweils eine Folge von abgeschätzten Symbolen, wobei die Ergebnisse der Abschätzung für die einzelnen Entscrambler aufgrund unterschiedlicher Phasenlagen des Downlink-Signals zu Entscrambling- und Spreizcode in den einzelnen Fingern des Rake-Verstärkers unterschiedlich sein können.

In den von den Entspreizern-Entscramblern EE gelieferten Symbolfolgen sind auch die Ergebnisse der Abschätzung von Trainingssequenzen enthalten, die von der Basisstation ausgestrahlt werden, und die für jedes Antennenelement der Basisstation quasi-orthogonal und charakteristisch sind. Ein Signalprozessor SP dient zum Vergleich der Ergebnisse der Abschätzung dieser Trainingssequenzen mit den der Teilnehmerstation bekannten, tatsächlich in den Trainingssequenzen enthaltenen Symbole. Anhand dieses Vergleichs kann die Impulsantwort des Übertragungskanals zwischen Basisstation BS und Teilnehmerstation MSk für jeden einzelnen Finger oder Tap ermittelt werden. An die Ausgänge der Entspreizer-Entscrambler EE ist auch ein Maximum Ratio Combiner MRC angeschlossen, der die einzelnen abgeschätzten Symbolfolgen zu einer kombinierten Symbolfolge mit bestmöglichen Signalrauschverhältnis zusammenfügt und diese an eine Sprachsignalverarbeitungseinheit SSV liefert. Die Arbeitsweise dieser Einheit SSV, die die empfangene Symbolfolge in ein für einen Benutzer hörbares Signal umwandelt bzw. empfangene Töne in eine Sendesymbolfolge umsetzt, ist hinlänglich bekannt und braucht hier nicht beschrieben zu werden.

Der Signalprozessor SP ermittelt für jeden Tap einzeln die Impulsantworten eines jeden Antennenelements $AE_1$, ..., $AE_M$ und fügt diese Impulsantworten in der z.B. aus der zitierten DE 198 03 188 bekannten Weise zu einer räumlichen Kovarianzmatrix $R_{xx}$ zusammen. Diese räumlichen Kovarianzmatrizen werden an eine Recheneinheit RE geliefert, deren Arbeitsweise anhand des Flußdiagramms aus Figur 4 beschrieben wird.

In einer Initialisierungsphase 1 summiert die Recheneinheit RE eine große Zahl von gelieferten Kovarianzmatrizen $R_{xx}$ für jeden Tap getrennt auf und bildet einen Mittelwert $\overline{R_{xx}}$ der Kovarianzmatrizen. Eine Analyse der Eigenwerte und Eigenvektoren der für die verschiedenen Taps erhaltenen gemittelten Kovarianzmatrizen $\overline{R_{xx}}$ schließt sich an (Schritt 2).

Die Analyse kann sich auf sämtliche Eigenvektoren und -werte der Kovarianzmatrix $\overline{R_{xx}}$ erstrecken, in dem hier betrachteten Fall ermittelt eine Kontrolleinheit KE unter den bei der Analyse gefundenen Eigenvektoren eine begrenzte Zahl, z.B. 2 oder 4, die die Eigenwerte mit den höchsten Beträgen aufweisen, und die folglich den Übertragungswegen mit der geringsten Dämpfung entsprechen. Alternativ kann ein Verfahren zur Eigenvektoranalyse eingesetzt werden, das die Eigenvektoren der Kovarianzmatrix $\overline{R_{xx}}$ in der Reihenfolge abnehmender Beträge der Eigenwerte liefert, und das abgebrochen wird, wenn die begrenzte Zahl von Eigenvektoren ermittelt ist.

Die Koeffizienten der ermittelten Eigenvektoren $\mathbf{w^{(k,1)}}$, $\mathbf{w^{(k,2)}}$, ... werden mit dem von der Sprachverarbeitungseinheit SSV kommenden Nutzdatenstrom kombiniert und über die Antenne A an die Basisstation übertragen (Schritt 4). Die Basisstation speichert sie in ihrer Speichereinheit SE zur Verwendung als Koeffizienten für die Multiplizierer M des Strahlformungsnetzes.

Nun geht die Recheneinheit RE in eine Arbeitsphase über, in der sie diese Kovarianzmatrizen $R_{xx}$ jeweils auf einen einzelnen Zeitschlitz der Teilnehmerstation bezogen von dem Signalprozessor SP empfängt (Schritt 5) und mit jedem der in der Speichereinheit gespeicherten, an die Basisstation übertragenen Eigenvektoren multipliziert, um die Eigenwerte dieser Vektoren für die betreffende Kovarianzmatrix $R_{xx}$ zu ermitteln (Schritt 6). Die Nummer des Eigenvektors, der den größeren Eigenwert aufweist, wird im Schritt 7 über die Kontrolleinheit KE an die Basisstation übermittelt. Dieser Eigenvektor wird als der dominierende Eigenvektor bezeichnet, denn er liefert den stärksten und in der Regel besten Beitrag zum Empfangssignal. Wenn lediglich zwei ermittelte Eigenvektoren im Speicherelement SE gespeichert sind und an die Basisstation übertragen worden sind, genügt ein Bit, um den Eigenvektor mit dem jeweils größeren Eigenwert zu bezeichnen. Folglich kann, wenn pro Zeitschlitz ein Bit für die Rückmeldung der Empfangseigenschaften an die Basisstation zur Verfügung steht, der von der Basisstation zur Strahlformung verwendete Vektor in jedem Zeitschlitz aktualisiert und für die Strahlformung im darauffolgenden Zeitschlitz verwendet werden.

Wenn vier Eigenwerte an die Basisstation übermittelt worden sind, sind zwei Bits zur Bezeichnung des jeweils dominierenden Eigenvektors erforderlich. Wenn ein Bit pro Zeitschlitz für die Rückübertragung der Empfangseigenschaften zur Verfügung steht, sind daher zwei Zeitschlitze erforderlich, um die vollständige Bezeichnung des dominierenden Vektors zu übertragen. Dieser wird folglich für die zwei auf seiner Übertragung folgenden Zeitschlitze für die Strahlformung genutzt; im Laufe dieser zwei Schlitze wird die anschließend zu verwendete Bezeichnung übertragen.

Die Schritte der Arbeitsphase können viele Male zyklisch wiederholt werden, bevor die Initialisierungsphase erneut durchgeführt werden muß, um die Koeffizienten der Eigenvektoren zu aktualisieren.

Der einfacheren Verständlichkeit wegen wurde oben zwischen Initialisierungsphase und Arbeitsphase unterschieden. Dies bedeutet jedoch nicht, daß beide Phasen zeitlich von einander getrennt ablaufen müssen. Es ist z.B. möglich und zweckmäßig, beide Phasen miteinander zu verschränken, indem die Recheneinheit RE mit einer empfangenen Kovarianzmatrix $R_{xx}$ zum einen die Eigenwertbestimmung des Schritts 6 ausführt, und zum anderen diese Matrix zur Bildung eines laufenden Mittelwerts $\overline{R_{xx}}$ der Kovarianzmatrizen in Schritt 1 heranzieht. Auf diese Weise ist gewährleistet, daß jederzeit eine aktuelle gemittelte Kovarianzmatrix $\overline{R_{xx}}$ zur Verfügung steht, an der die Eigenwertanalyse des Schritts 2 durchgeführt werden kann.

Die Berechnung der gemittelten Kovarianzmatrix $\overline{R_{xx}}$ erfolgt zweckmäßigerweise über eine gleitende Mittelwertbildung gemäß folgender Formel:

$$\left(\overline{R_{xx}}\right)_i = \rho\left(\overline{R_{xx}}\right)_{i-1} + (1-\rho)R_{xx\,i}\,,$$

wobei $\left(\overline{R_{xx}}\right)_i$ jeweils die i-te gemittelte Kovarianzmatrix bezeichnet, $(R_{xx})_i$ die i-te aktuelle Kovarianzmatrix bezeichnet und $\rho$ ein Maß für die Zeitkonstante der Mittelwertbildung mit einem Wert zwischen 0 und 1 darstellt.

Wenn zu Beginn einer Übertragungsverbindung zwischen Teilnehmerstation MSk und Basisstation BS noch keine gemittelte Kovarianzmatrix $\overline{R_{xx}}$ zur Verfügung steht, an der eine Eigenwertanalyse vorgenommen werden könnte, so sind dennoch bereits Daten zu übertragen. In dieser frühen Phase der Übertragungsverbindung werden anstelle von ermittelten Eigenvektoren vorab festgelegte erste Gewichtungsvektoren zum Gewichten des Downlink-Signals verwendet. Die Zahl dieser vorab festgelegten ersten Gewichtungsvektoren ist gleich der Zahl der später ermittelten Eigenvektoren und nicht größer als die der Zahl der Antennenelemente der Basisstation. Die vorab festgelegten ersten Gewichtungsvektoren bilden einen orthonormales System, insbesondere kann es sich um einen Satz von Vektoren der Form (1,0, 0, ...) (0, 1, 0, ...), (0,0, 1,0, ...) handeln. Eine solche Wahl der vorab festgelegten Gewichtungsvektoren bedeutet, daß jeder vorab festgelegte Gewichtungsvektor der Beaufschlagung eines einzigen Antennenelementes mit dem Downlink-Signal entspricht. Durch Übertragen einer Bezeichnung eines Gewichtungsvektors an die Basisstation hat die Teilnehmerstation somit die Möglichkeit, zu bestimmen, welches der mehreren Antennenelemente zum Ausstrahlen des für sie bestimmten Downlink-Signals verwendet wird.

Wenn die Zahl der ermittelten und an die Basisstation übertragenen Eigenvektoren zwei beträgt, so genügt ein einziges von der Teilnehmerstation an die Basisstation übertragenes Bit, um zu spezifizieren, welcher dieser Eigenvektoren von der Basisstation zum Senden verwendet werden soll. Dieses Bit kann auch aufgefaßt werden als eine Angabe über die Koeffizienten einer Linearkombination der zwei Eigenvektoren, die je nach Wert dieses Bits entweder (0,1) oder (1,0) betragen. Denkbar ist aber auch, daß die Basisstation fortlaufend mit beiden Gewichtungsvektoren gewichtete Downlink-Signale ausstrahlt, und daß die relative Phasenlage der zwei Gewichtungsvektoren anhand der von der Teilnehmerstation übertragenen Kurzzeit-Rückkopplungsinformation eingestellt wird. Selbstverständlich kann die von der Teilnehmerstation übertragene Linearkombinationskoeffizienten- und/oder - Phaseninformation auch jeweils mehr als ein Bit umfassen, so daß auch Zwischenwerte der Koeffizienten oder der Phasenverschiebung eingestellt werden können, und sie kann gegebenenfalls auf mehrere Zeitschlitze verteilt übertragen werden.

Das Verfahren ist ohne weiteres auf mehr als zwei Eigenvektoren verallgemeinerbar; in diesem Fall kann die Kurzzeit-Rückkopplungsinformation über Betrag und/oder Phase der einzelnen Eigenvektoren in einer vorgegebenen Reihenfolge übertragen werden, die der Basisstation die Zuordnung der Amplitudenund/ oder Phasenwerte zu einem Eigenvektor ermöglicht, oder es können die zwei oben vorgestellten Konzepte kombiniert werden, in dem jeweils eine Bezeichnung eines Eigenvektors im Zusammenhang mit Betrags- und/ oder Phaseninformation an die Basisstation übertragen wird.

Die Übertragung der Langzeit-Rückkopplungsinformation, die die Koeffizienten der einzelnen Eigenvektoren angibt, an die Basisstation kann über einen eigenen Signalisierungskanal erfolgen. Bevorzugt, weil mit den bestehenden Normen besser kompatibel, ist jedoch eine Übertragung im Zeitmultiplex mit der Kurzzeit-Rückkopplungsinformation innerhalb der Nutzlast-Datenpakte.

Figuren 6A, B und C zeigen unterschiedliche Formate für die Multiplexübertragung von Kurzzeit- und Langzeit-Rückkopplungsinformation im Rahmen eines WCDMA-Systems. Beim WCDMA-Standard umfaßt jeder Übertragungsrahmen 15 Zeitschlitze. Beim Multiplexformat von Figur 6A wird bei jeweils 14 der Zeitschlitze eines solchen Rahmens das zur Verfügung stehende Rückkopplungsbit zur Übertragung von Kurzzeit-Rückkopplungsinformation, d.h. von Bezeichnungen von zu verwendenden Eigenvektoren oder von relativen Amplituden und Phasen der den einzelnen Eigenvektoren entsprechenden Downlink-Signale, übertragen. Im fünfzehnten Rahmen wird ein Langzeit-Rückkopplungsbit übertragen, welches Information über die Komponenten der von der Teilnehmerstation ermittelten Eigenvektoren beinhaltet. Man erkennt, daß in diesem Format die Übertragung der Komponenten eines einzigen Eigenvektors eine Vielzahl von Rahmen in Anspruch nehmen muß, daß aber in dieser Zeit viele Male eine Bezeichnung eines Eigenvektors übertragen werden kann. Ein solches Format ist geeignet für den Dauerbetrieb einer Verbindung zu einer mäßig schnell bewegten Teilnehmerstation, die schnellem Fading ausgesetzt ist, deren Eigenvektoren sich jedoch nur langsam ändern.

Figur 6B zeigt ein zweites Multiplex-Format, bei dem sich jeweils vier Zeitschlitze, in denen Kurzzeit-Rückkopplungsinformation übertragen wird, mit einem Zeitschlitz für Langzeitzeit-Rückkopplungsinformation abwechseln. Dieses Format ist geeignet, falls eine schnelle Bewegung der Teilnehmerstation eine häufigere Aktualisierung der Eigenvektoren erfordert, es ist aber auch zweckmäßig für die Anfangsphase einer Verbindung, in der es wünschenswert ist, nach erstmaliger Berechnung eines Satzes von Eigenvektoren diese möglichst zügig zur Basisstation übertragen zu können.

Alternativ könnte auch ein Format zum Einsatz kommen, bei dem auf je zwei Zeitschlitze, in denen Kurzzeit-Rückkopplungsinformation übertragen wird, einer für Langzeit-Rückkopplungsinformation folgt. Beide Formate haben gegenüber anderen Zahlenverhältnissen von Zeitschlitzen für Kurzzeit- bzw. Langzeit-Rückkopplungsinformation den Vorteil, daß die Perioden dieser Formate von 5 bzw. 3 Bits genau in einen Zeitrahmen passen.

Des weiteren haben die oben beschriebenen Formate den Vorteil, daß sie eine gerade Zahl von Bits von Kurzzeit-Rückkopplungsinformation in jedem WCDMA-Rahmen übertragen. Wenn die Zahl der ermittelten und an die Basisstation übertragenen Eigenvektoren zwei beträgt, die Bezeichnung eines Eigenvektors also nur ein Bit umfaßt, hat dies keine Auswirkungen. In dem praktisch bedeutsamen Fall jedoch, daß jeweils vier Eigenvektoren an die Basisstation übertragen werden und die zu ihrer Auswahl von der Teilnehmerstation an die Basisstation übertragene Bezeichnung zwei Bit lang ist, paßt so immer eine ganze Zahl von Bezeichnungen in einen Rahmen, und ein Zusammenfügen von in verschiedenen Rahmen übertragenen Bits zu einer Bezeichnung ist nicht erforderlich.

Figur 6C zeigt ein Multiplexformat in einem erweiterten Sinne, bei dem die Übertragung von Kurzzeit-Rückkopplungsinformationen völlig unterbleibt. Ein solches Format ist für zwei verschiedene Anwendungssituationen besonders sinnvoll:

Zum einen eignet es sich für eine völlig unbewegte Teilnehmerstation, die keinem schnellen Fading ausgesetzt ist, d.h., eine Teilnehmerstation, deren aktuelle Kovarianzmatrizen $R_{xx}$ im wesentlichen konstant sind. Für eine solche Teilnehmerstation wird keine Kurzzeit-Rückkopplungsinformation benötigt; es ist lediglich wünschenswert, die für die Ausstrahlung des Downlink-Signals zu verwendenden Eigenvektoren möglichst schnell an der Basisstation zur Verfügung zu haben.

Die zweite Anwendungssituation ist die einer extrem schnell bewegten Teilnehmerstation, bei der die Empfangsqualitäten einzelner Übertragungswege so schnell variieren, daß die von der Teilnehmerstation gelieferte Kurzzeit-Rückkopplungsinformation zu der Zeit, wo sie von der Basisstation angewendet werden kann, bereits veraltet ist. Bei einer solchen Station ist es daher sinnvoller, die Eigenvektoren so schnell wie möglich zu aktualisieren. Zum Ausstrahlen des Downlink-Signals kann z.B. immer der jeweils beste Eigenvektor verwendet werden, in der Annahme, daß Empfangsunterbrechungen durch schnelles Fading aufgrund der großen Geschwindigkeit der Teilnehmerstation nie so lang anhalten werden, daß die Unterbrechung nicht durch Interpolation überbrückbar ist, oder es können mehrere Eigenvektoren gleichzeitig verwendet werden.

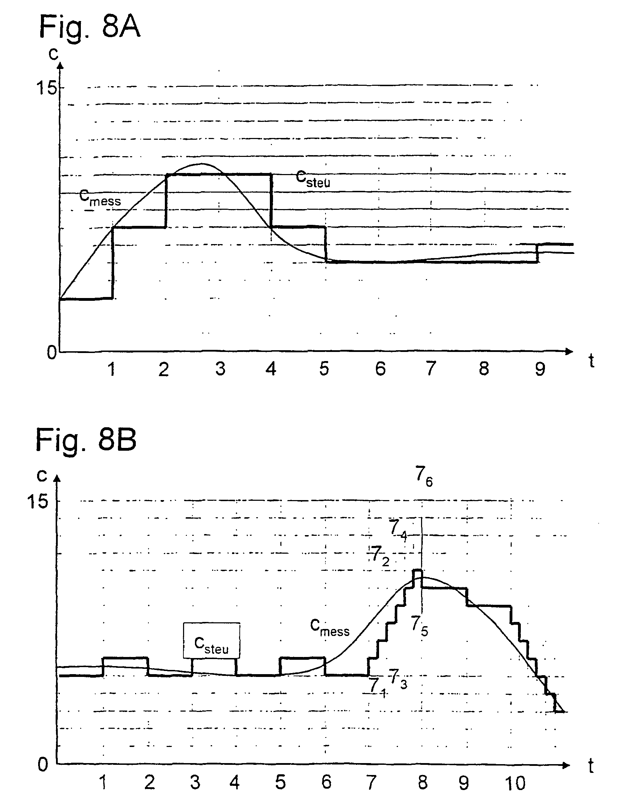

Fig. 8A und 8B zeigen die zeitliche Entwicklung einer Komponente c eines von der Basisstation BS verwendeten ersten Gewichtungsvektors für zwei verschiedene Methoden zur Übertragung der Langzeit-Rückkopplungsinformation von der Teilnehmerstation MSk zur Basisstation BS. Dabei bezeichnet eine dünne durchgezogene Linie $c_{mess}$ den zeitlichen Verlauf des von der Teilnehmerstation gemessenen Werts der Komponente c, und eine fette durchgezogene Linie $c_{steu}$ zeigt die Entwicklung des Werts von c, der von der Basisstation tatsächlich für die Strahlformung eingesetzt wird. Die Komponente c kann eine realwertige Komponente eines ersten Gewichtungsvektors, ein Real- oder Imaginärteil einer komplexwertigen Komponente oder auch ein Betrags- oder Winkelanteil sein.

Aufgrund der bei der Übertragung im Zeitmultiplex mit der Kurzzeit-Rückkopplungsinformation sehr begrenzten Bandbreite für die Übertragung der Werte von c kann die Basisstation BS den von der Teilnehmerstation MSk ermittelten Werten jeweils nur mit einer nichtverschwindenden Verzögerung folgen, die mehrere Zeitschlitze betragen kann und unter anderem von der Auflösung der übertragenen Langzeit-Rückkopplungsinformation bestimmt ist. Diese Verzögerung ist allerdings in der Darstellung der Figuren 8A und 8B vernachlässigt, um den Vergleich der zwei Methoden nicht unnötig zu verkomplizieren.

Als Beispiel wird angenommen, daß die Komponente c wird mit einer Auflösung von vier Bit gemessen und verarbeitet wird.

Im Falle der Fig. 8A beginnt die Komponente c zum Zeitpunkt t=0 mit dem Wert 3. Initialisierungsphasen, in denen die Basisstation jeweils den aktuellen Wert von c mißt, finden in regelmäßigen Zeitabständen zu Zeitpunkten t=1, 2, ... statt. Zum Zeitpunkt t=1 hat $c_{mess}$ den Wert 7 erreicht. Die Teilnehmerstation überträgt die Differenz +4 zwischen den zwei Meßwerten an die Basisstation, die daraufhin $c_{steu}$=7 setzt. Zur Übertragung der Differenz werden drei Bits verwendet, die die Werte -3, -2, -1, 0, 1, -..., 4 darstellen können. Eines von vier Bits wird eingespart. Die Einsparung könnte ausgeprägter sein, wenn der Zeitabstand zwischen zwei Messungen von c kürzer, die zu übertragende Differenz dementsprechend kleiner und die zu ihrer Übertragung benötigte Bitzahl geringer wäre. Welche Zeitabstände zwischen zwei Messungen die größtmögliche Einsparung an Übertragungsbandbreite gegenüber der Übertragung der kompletten Zahlenwerte von c erlaubt, hängt von den lokalen Gegebenheiten des Funk-Kommunikationsnetzes ab, in dem die Erfindung eingesetzt wird; er kann ggf. dynamisch festgelegt werden, z. B. durch Umschalten zwischen verschiedenen der mit Bezug auf Fig. 6A bis 6C beschriebenen Multiplexformate.

Zum Zeitpunkt t=2 wird eine Differenz von +3 übertragen und so $c_{steu}$=10 gesetzt. Bei t=3 ist $c_{mess}$ praktisch unverändert geblieben und die Differenz 0 wird übertragen; auch $c_{steu}$ bleibt unverändert. Auch bei t=6,7,8 wird jeweils die Differenz 0 übertragen.

Bei der in Fig. 8B gezeigten Methode mißt die Teilnehmerstation in jeder Initialisierungsphase den aktuellen Wert von c ($c_{mess}$) und vergleicht ihn mit dem in der vorhergehenden Initialisierungsphase ermittelten und gespeicherten Wert. Zum Zeitpunkt t=0 hat c ungefähr den Wert 5,4. Die Teilnehmerstation speichert dafür den quantisierten Wert 5. Zum Zeitpunkt t=1 mißt sie $c_{mess} \approx 5,5$. Dieser ist größer als der gespeicherte Wert; sie inkrementiert deshalb den gespeicherten Wert um 1 und überträgt eine Differenz +1 an die Basisstation, die daraufhin den von ihr verwendeten Wert $c_{steu}$ der Komponente c ebenfalls um 1 erhöht.

Zum Zeitpunkt t=2 beträgt $c_{mess}$ ca. 5,4; der Vergleich mit dem an der Teilnehmerstation gespeicherten Wert, der nun 6 beträgt, ergibt eine Verringerung. Infolgedessen dekrementiert die Teilnehmerstation den gespeicherten Wert von c und überträgt -1 an die Basisstation, die $c_{steu}$ ebenfalls dekrementiert. Der in der Teilnehmerstation gespeicherte Wert und $c_{steu}$ sind somit immer gleich.

Zum Zeitpunkt t=3 ist $c_{mess}$ auf 5,2 gefallen. Da der gespeicherte Wert 5 ist, wird dennoch eine Zunahme erkannt, und $c_{steu}$ wird auf 6 inkrementiert.

Man erkennt, daß bei dieser zweiten Methode $c_{steu}$ immer um $c_{mess}$ oszilliert, wenn $c_{mess}$ sich nur unwesentlich ändert. Der Vorteil der Methode liegt darin, daß in jeder Initialisierungsphase nur ein Bit zur Übertragung der Änderung von $c_{steu}$ benötigt wird, dessen Wert je nach Vorzeichen der festgestellten Änderung 0 oder 1 beträgt. Im Gegensatz dazu sind bei der ersten Methode, bei der auch eine Änderung von 0 übertragen werden kann, mindestens zwei Bits erforderlich, um eine Zunahme, das Gleichbleiben oder eine Abnahme von $c_{steu}$ zu übertragen.

Ab t=6 beginnt $c_{mess}$, schnell anzuwachsen und hat bei t=7 etwa den Wert 8 erreicht. Zum gleichen Zeitpunkt kann $c_{steu}$ nur auf den Wert 6 inkrementiert werden, es kommt also zu einer deutlichen Abweichung zwischen den zwei Werten. Um einem Auseinanderdriften von $c_{mess}$ und $c_{steu}$ im Falle einer schnellen Änderung von $c_{mess}$ entgegenzuwirken, ist vorgesehen, daß die Teilnehmerstation die Differenz der zwei Werte überwacht und bei Überschreitung eines vorgegebenen Grenzwerts die Zeitabstände zwischen zwei Initialisierungsphasen verkürzt. Dies ist im Beispiel der Fig 8B im Anschluß an den Zeitpunkt t=7 der Fall. $c_{steu}$ wird in kurzen Zeitabständen inkrementiert, bis zum Zeitpunkt $7_5$ $c_{steu}$ $c_{mess}$ überholt hat.

Aus der Dekrementierung von $c_{steu}$ zum Zeitpunkt t=$7_6$ = 8 folgert die Teilnehmerstation, daß die Phase des schnellen Anstiegs von $c_{mess}$ vorüber ist und erhöht den Zeitabstand zwischen zwei Initialisierungsphasen auf den ursprünglichen Wert.

Eine zweite Ausgestaltung des erfindungsgemäßen Verfahrens wird mit Bezug auf Figur 5 beschrieben. Bei dieser Ausgestaltung werden die ersten Gewichtungsvektoren anhand von Messungen der Uplink-Übertragung von einer Teilnehmerstation MSk zur Basisstation BS ermittelt. Die Basisstation BS ist zu diesem Zweck mit Komponenten analog zu dem mit Bezug auf Figur 3 für die Teilnehmerstation beschriebenen Rake-Searcher RS, Rake-Verstärker RA, Signalprozessor SP, Recheneinheit RE, Speicherelement SE etc. ausgestattet.

In Schritt 1 des Verfahrens bildet die Recheneinheit RE eine gemittelte Kovarianzmatrix für jeden einzelnen Tap des Uplink-Signals und ermittelt die Eigenvektoren und Eigenwerte der so erhaltenen Kovarianzmatrix. Diese Eigenwerte entsprechen jeweils einem Übertragungsweg und enthalten die Information über die relativen Phasenlagen des entsprechenden Beitrags des Uplink-Signals an den einzelnen Antennenelementen und damit über die Richtung, aus der der Beitrag empfangen wird. Wenn die Frequenzen von Uplink und Downlink bei dem betrachteten Funk-Kommunikationssystem gleich sind, können die in dem Eigenvektor enthaltenen Phaseninformationen direkt für die Gewichtung des Downlink-Signals genutzt werden. Falls die Frequenzen von Uplink und Downlink unterschiedlich sind, so ist es erforderlich, die in dem Eigenvektor enthaltene Phaseninformation unter Zugrundelegung der Uplink-Frequenz in eine entsprechende Richtung und diese Richtung anhand der Downlink-Frequenz wieder in Phaseninformation umzurechnen, um für die Strahlformung im Downlink geeignete Eigenvektoren zu erhalten.

Die Analyse des Schritts 2 umfaßt auch die Bestimmung der Eigenwerte der Eigenvektoren. Der Betrag des Eigenwerts ist ein Maß für die Qualität jedes einzelnen Übertragungsweges; für die spätere Verwendung wird daher eine gegebene Zahl von z.B. 2 oder 4 Eigenvektoren ausgewählt und in Schritt 3 gespeichert, die unter den gefundenen Eigenvektoren die Eigenwerte mit dem höchsten Betrag aufweisen.

In der sich anschließenden Arbeitsphase empfängt die Recheneinheit zyklisch Kovarianzmatrizen von dem Signalprozessor, wobei jede Kovarianzmatrix jeweils auf ein einzelnes Tap des Uplink-Signals bezogen ist. Die in der Speichereinheit SE gespeicherten Eigenvektoren entsprechen ihrerseits jeweils einem bestimmten Tap. Die Recheneinheit bestimmt in Schritt 6 für jeden gespeicherten Eigenvektor dessen aktuellen Eigenwert bei Multiplikation mit der in Schritt 5 gelieferten, dem gleichen Tap wie der Eigenvektor entsprechenden Kovarianzmatrix. Der erhaltene Eigenwert liefert ein Maß für die Übertragungsqualität auf dem dem Eigenvektor entsprechenden Übertragungweg mit einer zeitlichen Auflösung, die der Rate der Erzeugung der Kovarianzmatrizen in der Arbeitsphase entspricht. In dieser Phase werden die Kovarianzmatrizen von dem Signalprozessor jeweils für jeden der Teilnehmerstation zugeteilten Zeitschlitz aktuell erzeugt; der Eigenwert ist daher ein Maß für die Übertragungsqualität des Übertragungsweges unter Berücksichtigung des schnellen Fadings.

Bei einer ersten, einfachen Variante des Verfahrens schließt sich ein Schritt 8 an, in dem ein aktueller Gewichtungsvektor $w^{(k)}$ berechnet wird, indem eine Linearkombination der gespeicherten Eigenvektoren $w^{(k,1)}$, $w^{(k,2)}$, ...gebildet wird, wobei jeder der Eigenvektoren $w^{(k,1)}$, $w^{(k,2)}$, ... in die Linearkombination multipliziert mit seinem in Schritt 6 erhaltenen Eigenwert oder dessen Betrag eingeht. Eine Normierung der Linearkombination ist möglich. Durch diese Gewichtung bei der Bildung der Linearkombination ist gewährleistet, daß diejenigen Übertragungswege, die kurzfristig die besten Übertragungseigenschaften aufweisen, das von der Basisstation abgestrahlte Downlink-Signal dominieren. Die anderen in den aktuellen Gewichtungsvektor $w^{(k)}$ eingehenden Eigenvektoren dienen der Absicherung, daß auch in dem Falle, daß der am höchsten gewichtete Übertragungsweg von einem Zeitschlitz auf den nächsten ausfällt, ein brauchbares Signal bei der Teilnehmerstation ankommt.

Falls einer der Übertragungswege zwischen Basisstation und Teilnehmerstation eine Direktverbindung ist, so ist dies für die Basisstation darin erkennbar, daß der entsprechende Beitrag an dem empfangenen Uplink-Signal relativ geringe Phasenfluktuation und zumeist auch geringe Dämpfung aufweist. Wenn ein solcher direkter Übertragungsweg existiert, kann der zugeordnete Eigenvektor unmittelbar als aktueller Gewichtungsvektor $w^{(k)}$ verwendet werden, mit anderen Worten alle anderen Eigenvektoren gehen mit Koeffizienten 0 in die Bildung der Linearkombination ein.

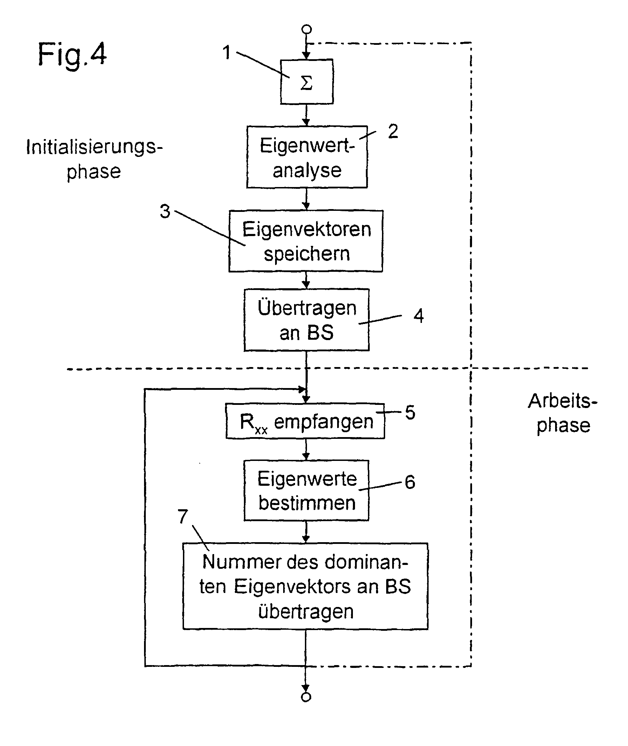

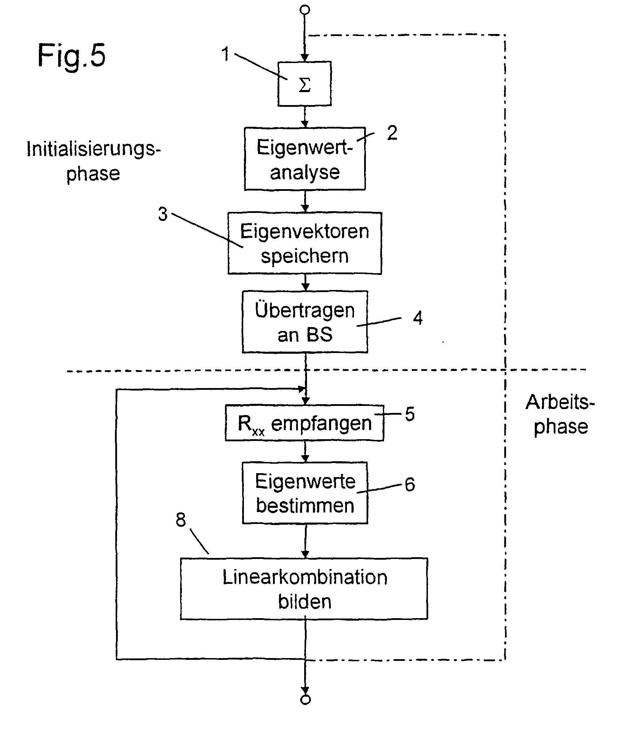

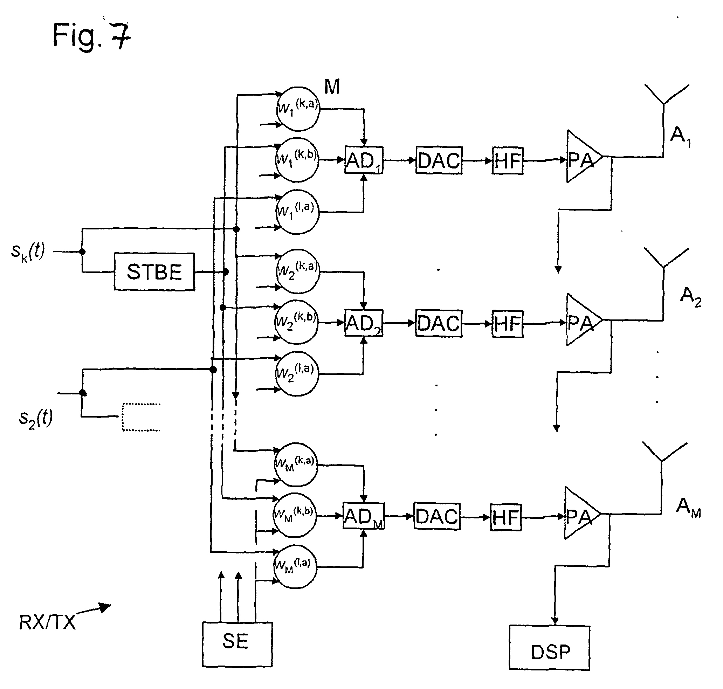

Eine weiterentwickelte Variante der mit Bezug auf Fig. 4 bzw. 5 beschriebenen Ausgestaltungen des Verfahrens setzt eine Basisstation mit einer mehrere Antennenelemente umfassende Antenneneinrichtung voraus, die in der Lage ist, unter Verwendung von Space-Time-Block-Codes auszustrahlen. Solche Codes sind z. B. aus Tarokh et al., Space-Time Block Codes from Orthogonal Designs, IEEE Trans. on Information Theory, Bd. 45 Nr. 5, Juli 1999, bekannt. Ein Ausschnitt der Sende/Empfangseinrichtung Tx/Rx einer solchen Basisstation ist in Figur 7 gezeigt. In dieser Sende/Empfangseinrichtung wird eine für die Teilnehmerstation MSk bestimmte komplexwertige Symbolfolge in zwei Stränge aufgeteilt, von denen einer einen Space-Time-Block-Encoder STBE enthält, der hier zwei aufeinanderfolgende Symbole der Symbolfolge $s_k(t)$ in ihrer Reihenfolge vertauscht, konjugiert und das Vorzeichen eines Symbols umkehrt. Die auf diese Weise erhaltenen zwei unterschiedlichen Symbolfolgen mit gleichem Informationsgehalt werden in einem Strahlformungsnetzwerk, dessen Aufbau analog zu dem mit Bezug auf Figur 2 beschriebenen ist und deshalb hier nicht wieder eingehend behandelt wird, mit zwei unterschiedlichen Eigenvektoren $w^{(k,a)}$, $w^{(k,b)}$ aus dem Satz der Eigenvektoren $w^{(k,1)}$, $w^{(k,2)}$, ... ($w^{(k,a)}$= ($w_1^{(k,a)}$, $w_2^{(k,a)}$, ..., $w_M^{(k,a)}$) gewichtet, additiv überlagert und ausgestrahlt. Die einzelnen Antennenelemente $A_1$, ... $A_M$ sind somit in der Lage, ein Gemisch von Signalen auszustrahlen, die eine unterschiedliche Space-Time-Block-Kodierung aufweisen. Die Kodierung ist somit nicht für ein einzelnes Antennenelement spezifisch sondern für einen Ausbreitungsweg a bzw. b, der dem zur Gewichtung verwendeten Eigenvektor $w^{(k,a)}$ bzw. $w^{(k,b)}$ entspricht. Dadurch ist gewährleistet, daß Signale, die die Teilnehmerstation MSk auf diesen zwei verschiedenen Übertragungswegen a, b erreichen, niemals destruktiv interferieren können, auch wenn ihre relative Verzögerung verschwindet.

Bei der mit Hilfe dieser Sende/Empfangseinrichtung ausgeführten Variante der zweiten Ausgestaltung des Verfahrens ist der Schritt 8 des Bildens einer Linearkombination somit durch die Space-Time-Block-Kodierung ersetzt. Ansonsten entsprechen sich die Verfahrensschritte; insbesondere besteht bei beiden Varianten die Möglichkeit, diejenigen unter den gespeicherten Eigenvektoren, die in die Linearkombination eingehen, bzw. zur Gewichtung der Space-Time-Block-kodierten Signale eingesetzt werden, von einem Zyklus der Arbeitsphase zum nächsten auszutauschen.

Space-Time Block Codes können auch bei einer Basisstation eingesetzt werden, die ein Downlinksignal auf drei oder mehr jeweils einem Eigenvektor entsprechenden Übertragungswegen abstrahlt. Eine erste Möglichkeit dafür ist die Verwendung von an sich bekannten Space-Time Block Codes, die die Erzeugung von drei oder mehr nicht destruktiv interferierenden Symbolfolgen aus einer Symbolfolge ermöglichen. Eine zweite, bevorzugte Möglichkeit ergibt sich daraus, daß es nur selten vorkommt, daß drei oder mehr Übertragungswege exakt gleiche Laufzeiten aufweisen. Nur wenn die Laufzeiten dieser Übertragungswege gleich sind, sind die (nicht zeitverschobenen) Trainingssequenzen der auf diesen Wegen übertragenen Signale orthogonal. Space-Time-Block-Codierung wird daher im allgemeinen nur zeitweilig und nur für jeweils zwei der Übertragungswege benötigt. Die Teilnehmerstation kann daher durch Überwachung der Orthogonalität der auf diesen Übertragungswegen empfangenen Downlinksignale Zeitgleichheit erkennen und - ggf. im Rahmen der Kurzzeit-Rückkopplungsinformation - der Basisstation jeweils Paare von Eigenvektoren bezeichnen, auf die Space-Time-Block-Codierung angewendet werden soll.

Die Anwendung von Space-Time Block Codes ist gerade in Kombination mit der hier vorgeschlagenen Verwendung von Eigenvektoren der Kovarianzmatrix als Gewichtungsvektoren besonders attraktiv. Da durch die Eigenvektorzerlegung das schnelle Fading/der schnelle Schwund der jeweils einem Eigenvektor entsprechenden Downlink-Strahlen unkorreliert ist, erlaubt es erst diese Zerlegung, den durch die Space-Time Block Codes theoretisch möglichen Diversitätsgewinn auch in der Praxis voll auszuschöpfen.

Abwandlungen der hier beschriebenen Ausgestaltungen liegen anhand der hier gegebenen Offenbarung im Rahmen des fachmännischen Könnens. Insbesondere ist eine Variante denkbar, bei der eine Ermittlung der Eigenvektoren am Uplink-Signal vorgenommen wird, so wie mit Bezug auf die zweite Ausgestaltung beschrieben, und bei der die ermittelten Eigenwerte von der Basisstation an die Teilnehmerstation ermittelt werden, so daß die Teilnehmerstation die Verfahrensschritte 5 bis 7, sowie mit Bezug auf Figur 4 für die erste Ausgestaltung des Verfahrens beschrieben, ausführen kann.

## Patentansprüche

1. Verfahren zur Strahlformung in einem Funk-Kommunikationssystem mit Teilnehmerstationen (MSk, MS1 bis MSn) und einer Basisstation (BS), die eine Antenneneinrichtung (AE) mit mehreren Antennenelementen ($A_1$ bis $A_M$) aufweist, die ein Downlinksignal jeweils gewichtet mit Koeffizienten $w_i$, i=1, ..., M eines aktuellen Gewichtungsvektors w abstrahlen, **dadurch gekennzeichnet, daß**

   a) in einer Initialisierungsphase eine Mehrzahl von ersten Gewichtungsvektoren $\mathbf{w}^{(j)}$ ermittelt werden, und
   b) in einer Arbeitsphase der für die Ausstrahlung eines Zeitschlitzes des für die Teilnehmerstation (MSk) bestimmten Downlinksignals verwendete aktuelle Gewichtungsvektor **w** anhand der ermittelten ersten Gewichtungsvektoren zyklisch neu festgelegt wird.

2. Verfahren nach Anspruch 1, **dadurch gekennzeichnet, daß** die ersten Gewichtungsvektoren anhand von Messungen der Downlink-Übertragung ermittelt werden.

3. Verfahren nach Anspruch 1 oder 2, **dadurch gekennzeichnet, daß**

   a) in der Initialisierungsphase die ersten Gewichtungsvektoren $\mathbf{w}^{(j)}$ an der Teilnehmerstation ermittelt werden, und die ermittelten ersten Gewichtungsvektoren an die Basisstation übertragen werden; und daß
   b) in der Betriebsphase die Teilnehmerstation unter den ermittelten ersten Gewichtungsvektoren einen dominierenden auswählt und eine Bezeichnung des dominierenden Gewichtungsvektors an die Basisstation überträgt.

4. Verfahren nach Anspruch 3, **dadurch gekennzeichnet, daß** zur Übertragung eines ersten Gewichtungsvektors an die Basisstation an der Teilnehmerstation die Differenz zwischen dem in der aktuellen Initialisierungsphase ermittelten Wert und dem in einer vorherigen Initialisierungsphase ermittelten Wert gebildet wird, diese Differenz an die Basisstation übertragen wird und dort zu einem in der vorherigen Phase ermittelten Wert addiert wird, um den aktuellen Wert des ersten Gewichtungsvektors wiederzugewinnen.

**5.** Verfahren nach Anspruch 3, **dadurch gekennzeichnet, daß** zur Übertragung eines ersten Gewichtungsvektors an die Basisstation an der Teilnehmerstation das Vorzeichen der Differenz zwischen dem in der aktuellen Initialisierungsphase ermittelten Wert und dem in einer vorherigen Initialisierungsphase ermittelten Wert gebildet wird, die Vorzeichen an die Basisstation übertragen werden und jede Komponente des dort gespeicherten ersten Gewichtungsvektors entsprechend dem übertragenen Vorzeichen um eine Einheit inkrementiert bzw. dekrementiert wird.

**6.** Verfahren nach einem der Ansprüche 3 bis 5, **dadurch gekennzeichnet, daß** in der Initialisierungsphase eine erste räumliche Kovarianzmatrix des empfangenen Downlinksignals erzeugt wird, daß Eigenvektoren der ersten Kovarianzmatrix ermittelt werden und daß die Eigenvektoren als erste Gewichtungsvektoren übertragen werden.

**7.** Verfahren nach Anspruch 6, **dadurch gekennzeichnet, daß** die erste Kovarianzmatrix für jeden Tap des Downlinksignals einzeln erzeugt wird.

**8.** Verfahren nach Anspruch 6 oder 7, **dadurch gekennzeichnet, daß** die ermittelten ersten Eigenvektoren diejenigen aus der Gesamtheit der Eigenvektoren der ersten Kovarianzmatrix oder -matrizen sind, die die größten Eigenwerte aufweisen.

**9.** Verfahren nach Anspruch 6, 7 oder 8, **dadurch gekennzeichnet, daß** die erste Kovarianzmatrix über eine Vielzahl von Zeitschlitzen des Downlinksignals gemittelt wird.

**10.** Verfahren nach einem der Ansprüche 6 bis 9, **dadurch gekennzeichnet, daß** in der Betriebsphase zyklisch eine zweite räumliche Kovarianzmatrix erzeugt wird, und daß als dominierender Gewichtungsvektor derjenige unter den ermittelten Eigenvektoren ausgewählt wird, der mit der zweiten Kovarianzmatrix den größten Eigenwert aufweist.

**11.** Verfahren nach einem der Ansprüche 3 bis 10, **dadurch gekennzeichnet, daß** jedes Antennenelement periodisch eine Trainingssequenz ausstrahlt, die zu den Trainingssequenzen der anderen Antennenelemente orthogonal ist, und daß die ersten Gewichtungsvektoren anhand der von der Teilnehmerstation empfangenen Trainingssequenzen ermittelt werden.

**12.** Verfahren nach einem der Ansprüche 3 bis 11, **dadurch gekennzeichnet, daß** die Zahl der ermittelten ersten Gewichtungsvektoren zwei beträgt, und daß die Bezeichnung des dominanten Gewichtungsvektors in jedem der Teilnehmerstation zugeteilten Zeitschlitz übertragen wird.

**13.** Verfahren nach Anspruch 12, **dadurch gekennzeichnet, daß** die Bezeichnung zur Strahlformung in dem unmittelbar auf ihre Übertragung folgenden Zeitschlitz eingesetzt wird.

**14.** Verfahren nach einem der Ansprüche 3 bis 11, **dadurch gekennzeichnet, daß** die Zahl der ermittelten ersten Gewichtungsvektoren $2^n$, n=2, 3, ... beträgt, und daß die n Bit umfassende Bezeichnung des dominanten Gewichtungsvektors in Portionen von a Bits, a=1, ..., n in jedem der Teilnehmerstation zugeteilten Zeitschlitz übertragen wird.

**15.** Verfahren nach Anspruch 14, **dadurch gekennzeichnet, daß** die Bezeichnung zur Strahlformung in den n/a unmittelbar auf ihre Übertragung folgenden Zeitschlitzen eingesetzt wird.

**16.** Verfahren nach einem der Ansprüche 3 bis 15, **dadurch gekennzeichnet, daß** in bestimmten Zeitschlitzen anstelle der Bezeichnung des dominierenden Gewichtungsvektors Information über die Komponenten eines Gewichtungsvektors übertragen wird.

**17.** Verfahren nach Anspruch 16, **dadurch gekennzeichnet, daß** das Verhältnis der Zahl von Zeitschlitzen, in denen eine Bezeichnung eines Gewichtungsvektors übertragen wird, oder der Zeitschlitze, in denen Information über die Komponenten eines Gewichtungsvektors übertragen wird, in Abhängigkeit von der Bewegungsgeschwindigkeit der Teilnehmerstation variabel ist.

**18.** Verfahren nach Anspruch 1 oder 2, **dadurch gekennzeichnet, daß** die ersten Gewichtungsvektoren anhand von Messungen der Uplink-Übertragung ermittelt werden.

**19.** Verfahren nach Anspruch 18, **dadurch gekennzeichnet, daß** in der Initialisierungsphase eine erste räumliche Kovarianzmatrix des empfangenen Uplinksignals erzeugt wird, daß Eigenvektoren der ersten Kovarianzmatrix ermittelt werden und daß die Eigenvektoren als erste Gewichtungsvektoren verwendet werden.

**20.** Verfahren nach Anspruch 19, **dadurch gekennzeichnet, daß** die erste Kovarianzmatrix für jeden Tap des Uplinksignals einzeln erzeugt wird.

**21.** Verfahren nach Anspruch 19 oder 20, **dadurch gekennzeichnet, daß** die ermittelten Eigenvektoren diejenigen aus der Gesamtheit der Eigenvektoren der ersten Kovarianzmatrix oder -matrizen sind, die die größten Eigenwerte aufweisen.

**22.** Verfahren nach Anspruch 19, 20 oder 21, **dadurch gekennzeichnet, daß** die erste Kovarianzmatrix über eine Vielzahl von Zeitschlitzen des Uplinksignals gemittelt wird.

**23.** Verfahren nach einem der Ansprüche 19 bis 22, **dadurch gekennzeichnet, daß** in der Betriebsphase zyklisch eine zweite räumliche Kovarianzmatrix erzeugt wird, und daß als dominierender Gewichtungsvektor derjenige unter den ermittelten Eigenvektoren ausgewählt wird, der mit der zweiten Kovarianzmatrix den größten Eigenwert aufweist.

**24.** Verfahren nach einem der Ansprüche 19 bis 23, **dadurch gekennzeichnet, daß** jede Teilnehmerstation periodisch eine Trainingssequenz ausstrahlt, und daß die ersten Gewichtungsvektoren anhand der von der Basisstation empfangenen Trainingssequenzen ermittelt werden.

**25.** Verfahren nach einem der Ansprüche 1, 2, 16 bis 24, **dadurch gekennzeichnet, daß** der aktuelle Gewichtungsvektor eine Linearkombination der ersten Gewichtungsvektoren ist.

**26.** Verfahren nach Anspruch 25, **dadurch gekennzeichnet, daß** die Teilnehmerstation in der Betriebsphase Information über die Koeffizienten der Linearkombination an die Basisstation überträgt.

**27.** Verfahren nach Anspruch 26, **dadurch gekennzeichnet, daß** die Information eine Phase und/oder einen Betrag eines Koeffizienten der Linearkombination angibt.

**28.** Verfahren nach Anspruch 26 oder 27, **dadurch gekennzeichnet, daß** die Zahl der ersten Gewichtungsvektoren 2 ist.

**29.** Verfahren nach Anspruch 19 und Anspruch 25, **dadurch gekennzeichnet, daß** die Koeffizienten der Linearkombination für einen ersten Gewichtungsvektor um so größer gewählt werden, je größer dessen Eigenwert ist.

**30.** Verfahren nach einem der Ansprüche 1, 2, 16 bis 22, **dadurch gekennzeichnet, daß** aus einer für die Teilnehmerstation (MSk) bestimmten Symbolfolge mehrere Downlink-Signale erzeugt werden, die jeweils eine unterschiedliche Space-Time-Block-Codierung aufweisen, und daß jedes der Downlinksignale mit einem anderen aktuellen Gewichtungsvektor gewichtet ausgestrahlt wird.

**31.** Verfahren nach Anspruch 25 oder 29, **dadurch gekennzeichnet, daß** der aktuelle Gewichtungsvektor aus den ersten Gewichtungsvektoren ausgewählt wird, wenn ein LOS-Übertragungsweg zwischen Basisstation und Teilnehmerstation existiert.

**32.** Verfahren nach einem der vorhergehenden Ansprüche, **dadurch gekennzeichnet, daß** vor Abschluß der Ermittlung der Mehrzahl von ersten Gewichtungsvektoren w $^{(j)}$ die Festlegung des für die Ausstrahlung eines Zeitschlitzes des für die Teilnehmerstation (MSk) bestimmten Downlinksignals verwendeten aktuellen Gewichtungsvektors **w** anhand von vorab festgelegten Gewichtungsvektoren erfolgt.

**33.** Verfahren nach Anspruch 32, **dadurch gekennzeichnet, daß** die vorab festgelegten Gewichtungsvektoren jeweils genau eine nichtverschwindende Komponente haben.

**Claims**

**1.** Method for beamforming in a radio communications system having subscriber stations (MSk,MS1 to MSn) and having a base station (BS) which has an antenna device (AE) with a number of antenna elements ($A_1$ to $A_M$), which emit a downlink signal in each case weighted with coefficients $w_i$, i = 1, ..., M of a current weighting vector **w characterized in that**

a) a number of first weighting vectors $\mathbf{w}^{(j)}$ are determined in an initialization phase, and
b) the current weighting vector **w** which is used for the emission of one time slot of the downlink signal which is intended for the subscriber station (MSk) is cyclically redefined in a working phase on the basis of the determined first weighting vectors.

**2.** Method according to Claim 1, **characterized in that** the first weighting vectors are determined on the basis of measurements of the downlink transmission.

**3.** Method according to Claim 1 or 2, **characterized in that**

a) the first weighting vectors $\mathbf{w}^{(j)}$ are determined in the subscriber station, and the determined first weighting vectors are transmitted to the base station, in the initialization phase; and **in that**
b) the subscriber station uses the determined first weighting vectors to select a dominant weighting vector, and transmits a designation of the dominant weighting vector to the base station, in the operating phase.

**4.** Method according to Claim 3, **characterized in that** the difference between the value determined in the current initialization phase and the value determined in a preceding initialization phase is formed at the subscriber station in order to transmit a first weighting vector to the base station, and this difference is transmitted to the base station where it is added to a value determined in the preceding phase in order to recover the current value of the first weighting vector.

5. Method according to Claim 3, **characterized in that** the mathematical sign of the difference between the value determined in the current initialization phase and the value determined in the preceding initialization phase is formed at the subscriber station in order to transmit a first weighting vector to the base station, the mathematical signs are transmitted to the base station, and each component of the first weighting vector stored there is incremented or decremented by one unit depending on the transmitted mathematical sign.

6. Method according to one of Claims 3 to 5, **characterized in that** a first spatial covariance matrix of the received downlink signal is produced in the initialization phase, **in that** eigen vectors of the first covariance matrix are determined, and **in that** the eigen vectors are transmitted as the first weighting vectors.

7. Method according to Claim 6, **characterized in that** the first covariance matrix is produced individually for each tap of the downlink signal.

8. Method according to Claim 6 or 7, **characterized in that** the determined first eigen vectors are those from the totality of eigen vectors of the first covariance matrix or matrices which have the highest eigen values.

9. Method according to Claim 6, 7 or 8, **characterized in that** the first covariance matrix is averaged over a large number of time slots in the downlink signal.

10. Method according to one of Claims 6 to 9, **characterized in that** a second spatial covariance matrix is produced cyclically in the operating phase, and **in that** the weighting vector which is chosen as the dominant weighting vector of the determined eigen vectors is that which has the highest eigen value with the second covariance matrix.

11. Method according to one of Claims 3 to 10, **characterized in that** each antenna element periodically emits a training sequence which is orthogonal to the training sequences of the other antenna elements, and **in that** the first weighting vectors are determined on the basis of the training sequences received by the subscriber station.

12. Method according to one of Claims 3 to 11, **characterized in that** the number of determined first weighting vectors is two, and **in that** the designation of the dominant weighting vector is transmitted in each time slot allocated to the subscriber station.

13. Method according to Claim 12, **characterized in that** the designation for beamforming is used in the time slot immediately following its transmission.

14. Method according to one of Claims 3 to 11, **characterized in that** the number of determined first weighting vectors is $2^n$, n = 2, 3, ..., and **in that** the designation, which comprises n bits, of the dominant weighting vector is transmitted in portions of a bits, a = 1, ..., n, in each time slot allocated to the subscriber station.

15. Method according to Claim 14, **characterized in that** the designation for beamforming is inserted in the n/a time slots which immediately follow its transmission.

16. Method according to one of Claims 3 to 15, **characterized in that** information relating to the components of a weighting vector is transmitted in specific time slots, instead of the designation of the dominant weighting vector.

17. Method according to Claim 16, **characterized in that** the ratio of the number of time slots in which a designation of a weighting vector is transmitted, or the time slots in which information relating to the components of a weighting vector is transmitted, is variable as a function of the speed of movement of the subscriber station.

18. Method according to Claim 1 or 2, **characterized in that** the first weighting vectors are determined on the basis of measurements of the uplink transmission.

19. Method according to Claim 18, **characterized in that** a first spatial covariance matrix of the received uplink signal is produced in the initialization phase, **in that** eigen vectors of the first covariance matrix are determined, and **in that** the eigen vectors are used as first weighting vectors.

20. Method according to Claim 19, **characterized in that** the first covariance matrix is produced individually for each tap of the uplink signal.

21. Method according to Claim 19 or 20, **characterized in that** the determined eigen vectors are those from the totality of eigen vectors of the first covariance matrix or matrices which have the highest eigen values.

**22.** Method according to Claim 19, 20, or 21, **characterized in that** the first covariance matrix is averaged over a large number of time slots in the uplink signal.

**23.** Method according to one of Claims 19 to 22, **characterized in that** a second spatial covariance matrix is produced cyclically in the operating phase, and **in that** the weighting vector which is chosen as the dominant weighting vector of the determined eigen vectors is that which has the highest eigen value with the second covariance matrix.

**24.** Method according to one of Claims 19 to 23, **characterized in that** each subscriber station periodically emits a training sequence, and **in that** the first weighting vectors are determined on the basis of the training sequences received by the base station.

**25.** Method according to one of Claims 1, 2, 16 to 24, **characterized in that** the current weighting vector is a linear combination of the first weighting vectors.

**26.** Method according to Claim 25, **characterized in that**, in the operating phase, the subscriber station transmits to the base station information relating to the coefficients of the linear combination.

**27.** Method according to Claim 26, **characterized in that** the information indicates a phase and/or a magnitude of one of the coefficients of the linear combination.

**28.** Method according to Claim 26 or 27, **characterized in that** the number of first weighting vectors is 2.

**29.** Method according to Claim 19 and Claim 25, **characterized in that** the coefficients of the linear combination for a first weighting vector are chosen to be greater the greater its eigen value.

**30.** Method according to one of Claims 1, 2, 16 to 22, **characterized in that** a number of downlink signals, which each have a different space time block coding, are produced from a symbol sequence which is intended for the subscriber station (MSk), and **in that** each of the downlink signals is emitted weighted with a different current weighting vector.

**31.** Method according to Claim 25 or 29, **characterized in that** the current weighting vector is chosen from the first weighting vectors when an LOS transmission path exists between the base station and the subscriber station.

**32.** Method according to one of the preceding claims, **characterized in that**, before the process of determining the number of first weighting vectors $\mathbf{w}^{(j)}$ is completed, the current weighting vector $\mathbf{w}$, which is used for the emission of a time slot in the downlink signal which is intended for the subscriber station (MSk), is defined on the basis of the previously defined weighting vectors.

**33.** Method according to Claim 32, **characterized in that** the previously defined weighting vectors each have one, and only one, component that does not disappear.

**Revendications**

**1.** Procédé de formation de faisceau dans un système de radiocommunication comprenant des stations d'abonnés (MSk, MS1 à MSn) et une station de base (BS) possédant un dispositif d'antenne (AE) avec plusieurs éléments d'antenne ($A_1$ à $A_M$) qui émettent un signal descendant pondéré à chaque fois par des coefficients $w_i$, i=1, ..., M d'un vecteur de pondération actuel w, **caractérisé en ce que**

a) dans une phase d'initialisation, on détermine une pluralité de premiers vecteurs de pondération $\mathbf{w}^{(j)}$ et
b) dans une phase de travail, on définit à nouveau, de manière cyclique, sur la base des premiers vecteurs de pondération déterminés, le vecteur de pondération actuel w utilisé pour l'émission d'un créneau temporel du signal descendant destiné à la station d'abonné (MSk).

**2.** Procédé selon la revendication 1, **caractérisé en ce que** les premiers vecteurs de pondération sont déterminés grâce à des mesures de la transmission descendante.

**3.** Procédé selon la revendication 1 ou 2, **caractérisé en ce que**

a) dans la phase d'initialisation, les premiers vecteurs de pondération $\mathbf{w}^{(j)}$ sont déterminés au niveau de la station d'abonné et les premiers vecteurs de pondération déterminés sont transmis à la station de base ; et **en ce que**
b) dans la phase de travail, la station d'abonné sélectionne un vecteur dominant parmi les premiers vecteurs de pondération déterminés et transmet une désignation du vecteur de pondération dominant à la station de base.

**4.** Procédé selon la revendication 3, **caractérisé en ce que**, pour transmettre un premier vecteur de pondération à la station de base, on forme, au niveau de la station d'abonné, la différence entre la valeur déterminée dans la phase d'initialisation actuelle et la valeur déterminée dans une phase d'initialisation antérieure, cette différence est transmise à la station de base et y est additionnée à une valeur déterminée dans la phase précédente pour retrouver la valeur actuelle du premier vecteur de pondération.

**5.** Procédé selon la revendication 3, **caractérisé en ce que**, pour transmettre un premier vecteur de pondération à la station de base, on forme, au niveau de la station d'abonné, le signe de la différence entre la valeur déterminée dans la phase d'initialisation actuelle et la valeur déterminée dans une phase d'initialisation antérieure, les signes sont transmis à la station de base et chaque composante du premier vecteur de pondération mémorisé dans la station de base est incrémentée resp. décrémentée d'une unité en fonction du signe transmis.

**6.** Procédé selon l'une des revendications 3 à 5, **caractérisé en ce que**, dans la phase d'initialisation, une première matrice de covariance spatiale du signal descendant reçu est générée, **en ce que** les vecteurs propres de la première matrice de covariance sont déterminés et **en ce que** les vecteurs propres sont transmis en tant que premiers vecteurs de pondération.

**7.** Procédé selon la revendication 6, **caractérisé en ce que** la première matrice de covariance est générée individuellement pour chaque prise du signal descendant.

**8.** Procédé selon la revendication 6 ou 7, **caractérisé en ce que** les premiers vecteurs propres déterminés sont ceux qui, sur la totalité des vecteurs propres de la première ou des premières matrices de covariance, ont les valeurs propres les plus grandes.

**9.** Procédé selon la revendication 6, 7 ou 8, **caractérisé en ce que** la première matrice de covariance est déterminée sur une pluralité de créneaux temporels du signal descendant.

**10.** Procédé selon l'une des revendications 6 à 9, **caractérisé en ce que**, dans la phase de travail, on génère de manière cyclique une seconde matrice de covariance spatiale et **en ce que** l'on sélectionne, en tant que vecteur de pondération dominant, celui qui, parmi les vecteurs propres déterminés, présente la plus grande valeur propre avec la seconde matrice de covariance.

**11.** Procédé selon l'une des revendications 3 à 10, **caractérisé en ce que** chaque élément d'antenne émet périodiquement une séquence d'apprentissage qui est orthogonale aux séquences d'apprentissage des autres éléments d'antenne et **en ce que** les premiers vecteurs de pondération sont déterminés sur la base des séquences d'apprentissage reçues par la station d'abonné.

**12.** Procédé selon l'une des revendications 3 à 11, **caractérisé en ce que** le nombre des premiers vecteurs de pondération déterminés est égal à deux, et **en ce que** la désignation du vecteur de pondération dominant est transmise dans chaque créneau temporel alloué à la station d'abonné.

**13.** Procédé selon la revendication 12, **caractérisé en ce que** la désignation est utilisée pour la formation de faisceau dans le créneau temporel suivant immédiatement sa transmission.

**14.** Procédé selon l'une des revendications 3 à 11, **caractérisé en ce que** le nombre des premiers vecteurs de pondération déterminés est égal à $2^n$, n=2, 3, ..., et **en ce que** la désignation du vecteur de pondération dominant, qui comprend n bits, est transmise en portions de a bits, a=1, ..., n dans chaque créneau temporel alloué à la station d'abonné.

**15.** Procédé selon la revendication 14, **caractérisé en ce que** la désignation est utilisée pour la formation de faisceau dans les n/a créneaux temporels suivant immédiatement sa transmission.

**16.** Procédé selon l'une des revendications 3 à 15, **caractérisé en ce que**, dans certains créneaux temporels, on transmet, à la place de la désignation du vecteur de pondération dominant, de l'information sur les composantes d'un vecteur de pondération.

**17.** Procédé selon la revendication 16, **caractérisé en ce que** le rapport entre le nombre de créneaux temporels dans lesquels une désignation d'un vecteur de pondération est transmise ou des créneaux temporels dans lesquels de l'information sur les composantes d'un vecteur de pondération est transmise est variable en fonction de la vitesse de déplacement de la station d'abonné.

**18.** Procédé selon la revendication 1 ou 2, **caractérisé en ce que** les premiers vecteurs de pondération sont déterminés grâce à des mesures de la transmission montante.

**19.** Procédé selon la revendication 18, **caractérisé en ce que**, dans la phase d'initialisation, une première matrice de covariance spatiale du signal montant reçu est générée, **en ce que** les vecteurs propres de la première matrice de covariance sont déterminés et **en ce que** les vecteurs propres sont utilisés en tant que premiers vecteurs de pondération.

**20.** Procédé selon la revendication 19, **caractérisé en ce que** la première matrice de covariance est générée individuellement pour chaque prise du signal montant.

**21.** Procédé selon la revendication 19 ou 20, **caractérisé en ce que** les vecteurs propres déterminés sont ceux qui, sur la totalité des vecteurs propres de la première ou des premières matrices de covariance, ont les valeurs propres les plus grandes.

**22.** Procédé selon la revendication 19, 20 ou 21, **caractérisé en ce que** la première matrice de covariance est déterminée sur une pluralité de créneaux temporels du signal montant.

**23.** Procédé selon l'une des revendications 19 à 22, **caractérisé en ce que**, dans la phase de travail, on génère de manière cyclique une seconde matrice de covariance spatiale et **en ce que** l'on sélectionne, en tant que vecteur de pondération dominant, celui qui, parmi les vecteurs propres déterminés, présente la plus grande valeur propre avec la seconde matrice de covariance.

**24.** Procédé selon l'une des revendications 19 à 23, **caractérisé en ce que** chaque station d'abonné émet périodiquement une séquence d'apprentissage et **en ce que** les premiers vecteurs de pondération sont déterminés sur la base des séquences d'apprentissage reçues par la station de base.

**25.** Procédé selon l'une des revendications 1, 2, 16 à 24, **caractérisé en ce que** le vecteur de pondération actuel est une combinaison linéaire des premiers vecteurs de pondération.

**26.** Procédé selon la revendication 25, **caractérisé en ce que** la station d'abonné transmet à la station de base, dans la phase de travail, de l'information sur les coefficients de la combinaison linéaire.

**27.** Procédé selon la revendication 26, **caractérisé en ce que** l'information indique une phase et/ou une grandeur d'un coefficient de la combinaison linéaire.

**28.** Procédé selon la revendication 26 ou 27, **caractérisé en ce que** le nombre des premiers vecteurs de pondération est égal à 2.

**29.** Procédé selon la revendication 19 et la revendication 25, **caractérisé en ce que** les coefficients de la combinaison linéaire sont choisis de manière à être d'autant plus importants, pour un premier vecteur de pondération, que la valeur propre de ce dernier est élevée.

**30.** Procédé selon l'une des revendications 1, 2, 16 à 22, **caractérisé en ce que** l'on produit, à partir d'une suite de symboles destinée à la station d'abonné (MSk), plusieurs signaux descendants qui présentent à chaque fois un codage spatio-temporel par blocs différent, et **en ce que** chacun des signaux descendants est émis pondéré par un autre vecteur de pondération actuel.

**31.** Procédé selon la revendication 25 ou 29, **caractérisé en ce que** le vecteur de pondération actuel est sélectionné parmi les premiers vecteurs de pondération lorsqu'il existe un trajet de transmission en ligne de vue (LOS) entre la station de base et la station d'abonné.

**32.** Procédé selon l'une des revendications précédentes, **caractérisé en ce que** la définition du vecteur de pondération actuel w utilisé pour l'émission d'un créneau temporel du signal descendant destiné à la station d'abonné (MSk) s'accomplit avant la fin de la détermination de la pluralité de premiers vecteurs de pondération $\mathbf{w}^{(j)}$, sur la base de vecteurs de pondération préalablement définis.

**33.** Procédé selon la revendication 32, **caractérisé en ce que** les vecteurs de pondération préalablement définis possèdent à chaque fois, précisément, une composante non évanouissante.

# Fig.1

(Stand der Technik)

Fig.2

# Fig.3

# Fig.6A

| Zeitschlitz | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Kurzzeit | 1 | 1 | 1 | 1 | 1 | 1 | 1 | 1 | 1 | 1 | 1 | 1 | 1 | 1 | 0 |
| Langzeit | 0 | 0 | 0 | 0 | 0 | 0 | 0 | 0 | 0 | 0 | 0 | 0 | 0 | 0 | 1 |

# Fig.6B

| Zeitschlitz | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Kurzzeit | 1 | 1 | 1 | 1 | 0 | 1 | 1 | 1 | 1 | 0 | 1 | 1 | 1 | 1 | 0 |
| Langzeit | 0 | 0 | 0 | 0 | 1 | 0 | 0 | 0 | 0 | 1 | 0 | 0 | 0 | 0 | 1 |

# Fig.6C

| Zeitschlitz | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Kurzzeit | 0 | 0 | 0 | 0 | 0 | 0 | 0 | 0 | 0 | 0 | 0 | 0 | 0 | 0 | 0 |
| Langzeit | 1 | 1 | 1 | 1 | 1 | 1 | 1 | 1 | 1 | 1 | 1 | 1 | 1 | 1 | 1 |

# Fig.4

Initialisierungsphase

1 → $\Sigma$

Eigenwertanalyse — 2

3 — Eigenvektoren
speichern

Übertragen
an BS — 4

Arbeitsphase

$R_{xx}$ empfangen — 5

Eigenwerte
bestimmen — 6

7 — Nummer des dominanten Eigenvektors an BS
übertragen

# Fig.5

Initialisierungsphase

1 → [ Σ ]

[ Eigenwertanalyse ] 2

3 [ Eigenvektoren
speichern ]

[ Übertragen
an BS ] 4

Arbeitsphase

[ $R_{xx}$ empfangen ] 5

[ Eigenwerte
bestimmen ] 6

8 [ Linearkombination
bilden ]

Fig. 7

## Fig. 8A

## Fig. 8B